# EUROPÄISCHE PATENTSCHRIFT

(11) **EP 4 177 010 B1**
(45) Veröffentlichungstag und Bekanntmachung des Hinweises auf die Patenterteilung: **14.02.2024**
(21) Anmeldenummer: 21206551.0
(22) Anmeldetag: 04.11.2021
(51) Int. Cl.: B25B 27/00, B25B 27/14

(54) **HOHLZYLINDRISCHE VORSPANNPATRONE FÜR EIN INSTALLATIONSWERKZEUG EINES DRAHTGEWINDEEINSATZES**
A HOLLOW CYLINDRICAL PRESTRESSING CARTRIDGE FOR AN INSTALLATION TOOL OF A WIRE THREAD INSERT
BOBINOIR PRÉLIMINAIRE CYLINDRIQUE CREUX POUR UN OUTIL D'INSTALLATION D'UN INSERT HÉLICOÏDAL EN FIL MÉTALLIQUE

(43) Veröffentlichungstag der Anmeldung: 10.05.2023
(73) Patentinhaber: Böllhoff Verbindungstechnik GmbH, 33649 Bielefeld (DE)
(72) Erfinder: Purrio, Marcel, 33619 Bielefeld (DE); Schiemann, Thorben, 31688 Nienstädt (DE); Butov, Alexej, 33332 Gütersloh (DE)
(74) Vertreter: HWP Intellectual Property

(56) Entgegenhaltungen:
- EP-A2- 1 084 800
- DE-A1- 2 143 182
- US-A1- 2010 325 857

## Beschreibung

### 1. Gebiet der Erfindung

Die vorliegende Erfindung betrifft eine hohlzylindrische Vorspannpatrone eines Installationswerkzeugs eines Drahtgewindeeinsatzes, welche in Kombination mit einem Installationsmodul und einem Antriebsmodul in dem Installationswerkzeug eingesetzt wird. Des Weiteren betrifft vorliegende Erfindung einen Nachrüstsatz mit mehreren hohlzylindrischen Vorspannpatronen, ein Installationswerkzeug obiger Zusammensetzung sowie ein Installationsverfahren für den Drahtgewindeeinsatz in einer Gewindebohrung eines Bauteils mit einem Installationswerkzeug.

### 2. Hintergrund der Erfindung

Um Gewindeverbindungen in Bauteilen aus mechanisch weniger belastbare Materialien, wie beispielsweise Kunststoff und Metall, verlässlich herstellen zu können, werden Drahtgewindeeinsätze in Bohrungen mit Innengewinde eingesetzt. Der Drahtgewindeeinsatz besteht aus einer zylindrischen Drahtwendel eines profilierten Drahts. Er ist mit Übermaß bezogen auf das zu verstärkende Innengewinde der Gewindebohrung gewickelt.

Ein Installationswerkzeug nutzt eine Vorspannpatrone, um den Drahtgewindeeinsatz auf einen zum Innengewinde passenden Außendurchmesser auf eine Einbauspindel des Installationswerkzeugs zu wickeln.

Derartige Installationswerkzeuge sind als Handgeräte in US 4,553,302 beschrieben. Die allein manuell angetriebenen Werkzeuge arbeiten häufig zu langsam oder ihnen fehlt das nötige Drehmoment zur Installation des Drahtgewindeeinsatzes.

Ein motorisch betriebenes Einbauwerkzeug nach dem Oberbegriff von Anspruch 1 2- ist in US 2010/0325857 A1 beschrieben. Das Einbauwerkzeug nutzt eine Vorspannpatrone, die federnversetzbar im Einbauwerkzeug vorgespannt ist. Vor der Installation des Drahtgewindeeinsatzes stützt sich die ringförmige Stirnfläche der Vorspannpatrone angrenzend an die Gewindebohrung am Bauteil ab. Während die Einbauspindel den Drahtgewindeeinsatz in die Gewindebohrung eindreht, taucht die Vorspannpatrone gegen die Last einer Feder in das Einbauwerkzeug ein.

Häufig besteht das Problem, die Einbautiefe des Drahtgewindeeinsatzes in der Gewindebohrung zu erfassen. Dies gewährleistet eine passende Gewindeverstärkung in Anpassung an das einzuschraubende Gewindeelement.

Zu diesem Zweck offenbart DE 21 43 182 einen Mikroschalter, der einer installierenden Einbauspindel nachgelagert ist. Der Mikroschalter wird ausgelöst, sobald die Einbauspindel mit dem Drahtgewindeeinsatz eine gewisse Tiefe in der Gewindebohrung erreicht hat. Der Mikroschalter löst dann eine Umkehrung der Drehrichtung des die Einbauspindel drehenden Motors aus. Entsprechend wird die Einbauspindel aus dem Drahtgewindeeinsatz ausgedreht und der Drahtgewindeeinsatz in der Gewindebohrung installiert. Die manuelle wie auch die automatische Installation von Drahtgewindeeinsätzen hat häufig das Problem, dass die Orientierung des Installationswerkzeugs und somit die Installationsrichtung nicht klar definiert sind. Dies resultiert in Installationsfehlern, Verschleiß der Einbauspindel sowie zusätzlichen Arbeitsaufwand zur Korrektur des eingebauten Drahtgewindeeinsatzes.

Es ist daher die Aufgabe vorliegender Erfindung, ein Installationswerkzeug bereitzustellen, mit dem ein Drahtgewindeeinsatz verlässlich installierbar ist.

### 3. Zusammenfassung der Erfindung

Die obige Aufgabe wird durch eine hohlzylindrische Vorspannpatrone eines Installationswerkzeugs eines Drahtgewindeeinsatzes gemäß dem unabhängigen Patentanspruch 1, durch ein Installationswerkzeug eines Drahtgewindeeinsatzes mit einem Installationsmodul mit der hohlzylindrischen Vorspannpatrone sowie einem motorischen Antriebsmodul gemäß dem unabhängigen Patentanspruch 9, durch einen Nachrüstsatz für ein Installationswerkzeug eines Drahtgewindeeinsatzes mit einer Mehrzahl von hohlzylindrischen Vorspannpatronen gemäß Patentanspruch 13 sowie durch ein Installationsverfahren für einen Drahtgewindeeinsatz in einer Gewindebohrung eines Bauteils mit einem Installationswerkzeug gemäß Patentanspruch 14 gelöst. Vorteilhafte Ausgestaltungen und Weiterentwicklungen vorliegender Erfindung gehen aus der folgenden Beschreibung, den begleitenden Zeichnungen sowie den anhängenden Patentansprüchen hervor.

Vorliegende Erfindung offenbart eine hohlzylindrische Vorspannpatrone eines Installationswerkzeugs eines Drahtgewindeeinsatzes, welche die folgenden Merkmale aufweist: einen innerhalb der Vorspannpatrone verlaufenden Spindelkanal, in dem eine Einbauspindel mit einem Installationsende und einem Antriebsende in einem inneren Spindelführungsgewinde geführt ist, eine den Spindelkanal zumindest teilweise umgebende Außenwand der Vorspannpatrone mit einem radialen Positionierfenster benachbart zu einem ersten axialen Ende der Vorspannpatrone abgewandt von dem Antriebsende der Einbauspindel, durch welches ein Drahtgewindeeinsatz im Spindelkanal auf der Einbauspindel positionierbar ist, mindestens eine erste taktile Erfassungseinheit, die über eine bevorzugt ringförmige Stirnseite der Vorspannpatrone am ersten axialen Ende hinaus ragt und parallel zu einer Längsachse der Vorspannpatrone versetzbar ist, wobei ein axialer Versatz der mindestens einen taktilen Erfassungseinheit mit einem ersten Erfassungssensor der Vorspannpatrone erfassbar ist.

Die erfindungsgemäße Vorspannpatrone weist bewährte konstruktive Merkmale, wie eine hohlzylindrische Form sowie ein radiales Positionierfenster zum Installieren eines Drahtgewindeeinsatzes auf. Auf diese bekannten und bewährten konstruktiven Merkmale baut die Nutzung eines an der radialen Innenseite der hohlzylindrischen Vorspannpatrone angeordneten Spindelführungsgewindes auf. Das Spindelführungsgewinde hält die Einbauspindel und versetzt diese in Längsrichtung der Vorspannpatrone und der Einbauspindel in Abhängigkeit von einer Drehung der Einbauspindel um die Längsachse. Da vorzugsweise eine Steigung des Spindelführungsgewindes bekannt ist, lässt sich aus der Drehung der Einbauspindel ein axialer Versatz eines zu installierenden Drahtgewindeeinsatzes in Einbaurichtung ableiten. Die Einbaurichtung ist in diesem Zusammenhang derart definiert, dass sie parallel zur Längsachse der Einbauspindel verläuft und in die Gewindeöffnung eines Bauteils weist.

Neben der Führung der Einbauspindel in einem inneren Spindelführungsgewinde der Vorspannpatrone ragt mindestens eine erste taktile Erfassungseinheit über die bevorzugt ringförmige Stirnseite der Vorspannpatrone an deren erstem axialen Ende hinaus. Die bevorzugt ringförmige Stirnseite bildet das axiale Ende der Vorspannpatrone, welches dem Bauteil und der für die Installation des Drahtgewindeeinsatzes ausgewählten Gewindeöffnung bzw. Gewindebohrung zugewandt ist. Es ist ebenfalls bevorzugt, neben einer ringförmigen Stirnseite auch mehreckige oder elliptische Konstruktionen zu wählen. Die mindestens eine taktile Erfassungseinheit umfasst einen Erfassungssensor, mit welchem ein axialer Versatz der taktilen Erfassungseinheit erfassbar ist. Da die taktile Erfassungseinheit über die ringförmige Stirnseite der Vorspannpatrone hinausragt, stellt sie bevorzugt einen physischen Kontakt zur benachbarten Oberfläche des Bauteils mit der Gewindebohrung her. Auf diese Weise erfasst die mindestens eine erste taktile Erfassungseinheit einen Abstand zur benachbarten Bauteiloberfläche in qualitativer Form und/oder in absoluter Form. Qualitativ bedeutet in diesem Zusammenhang, dass in einem bevorzugten Steuergerät ein Abstandsbereich zwischen ringförmiger Stirnseite der Vorspannpatrone und der benachbarten Bauteiloberfläche vorgegeben ist, innerhalb dessen ein durch die taktile Erfassungseinheit erfasster Abstand liegen sollte. In einer anderen bevorzugten Ausgestaltung ist es bevorzugt, dass die mindestens eine erste taktile Erfassungseinheit einen absoluten Abstand zwischen der ringförmigen Stirnseite der Vorspannpatrone und der benachbarten Oberfläche des Bauteils bestimmt.

Gemäß einer bevorzugten Ausführungsform der hohlzylindrischen Vorspannpatrone weist die mindestens eine taktile Erfassungseinheit einen Fühlerstift auf, der federvorgespannt in einem Kanal der Außenwand angeordnet ist.

Um einen möglichen Abstand zwischen der ringförmigen Stirnseite der Vorspannpatrone und einer benachbarten Bauteiloberfläche zu erfassen, weist die taktile Erfassungseinheit neben einem Sensor einen federvorgespannten Fühlerstift auf. Der Fühlerstift ist bevorzugt in einem Kanal der Außenwand der hohlzylindrischen Vorspannpatrone geführt. Die Federvorspannung sorgt dafür, dass der Fühlerstift durch die Federwirkung in Einbaurichtung des Drahtgewindeeinsatzes gedrückt wird. Dies führt dazu, dass der Fühlerstift mit seinem Tastende über die ringförmige Stirnseite der Vorspannpatrone hinausragt und gegen die Kraft der Federvorspannung durch eine angrenzende Bauteiloberfläche in den Kanal in der Wand der Vorspannpatrone gedrückt werden kann. Da sich der Fühlerstift während dieser axialen Bewegung an dem ersten Erfassungssensor entlang bewegt, sind Veränderungen in der axialen Position des Fühlerstifts in Bezug auf die Vorspannpatrone erfassbar. Diese Informationen lassen sich bevorzugt auswerten, um einen Abstand einer benachbarten Bauteiloberfläche und der ringförmigen Stirnseite der Vorspannpatrone zu erfassen, auszuwerten und auf Grundlage dieser Information Steuerungsinformationen an ein Einbauwerkzeug während der Installation des Drahtgewindeeinsatzes zu geben.

Weiterhin bevorzugt umfasst der Fühlerstift ein axiales Tastende und ein axiales Erfassungsende, wobei das axiale Tastende angrenzend an die ringförmige Stirnseite und das axiale Erfassungsende benachbart zu dem ersten Erfassungssensor angeordnet ist.

Wie oben bereits angesprochen worden ist, umfasst der Fühlerstift ein Tastende, welches über die ringförmige Stirnseite hinausragt sowie ein Erfassungsende, welches sich benachbart zu dem erfassenden Sensor bewegt. Da es sich bei dem Erfassungssensor um unterschiedliche Sensortypen handeln kann, wie beispielsweise ein induktiver Sensor, ein kapazitiver Sensor oder ein optischer Sensor, ist das axiale Erfassungsende des Fühlerstifts entsprechend dem Sensorprinzip angepasst. Im Falle eines optischen Sensors dient das Erfassungsende dazu, gewisse optische Signale des Sensors zu reflektieren oder zu unterbrechen oder dergleichen, um ein optisches Signal entsprechend der axialen Position des Fühlerstiftes zu erzeugen. Im Hinblick auf einen induktiven oder einen kapazitiven Sensor verändert das Erfassungsende des Fühlerstifts das den Sensor umgebende elektromagnetische Feld oder die im Sensor wahrgenommene Kapazität, sodass aufgrund dieser Änderungen ebenfalls eine Änderung der axialen Position des Fühlerstifts erfasst werden kann. Diese Änderung der axialen Position des Fühlerstifts wird vorzugsweise durch einen Kontakt zwischen der benachbarten Bauteiloberfläche und dem Erfassungsende erzeugt. Da der Fühlerstift federvorgespannt ist in Einbaurichtung, ist es ebenfalls denkbar, dass die Federwirkung den Fühlerstift in Einbaurichtung bewegt, ohne dass diese Bewegung durch einen Kontakt mit einer benachbarten Bauteiloberfläche begrenzt wird. Somit würde die Federvorspannung des Fühlerstifts für eine axiale Auslenkung des Fühlerstifts sorgen, die entsprechend ein Signal im Erfassungssensor generiert.

Gemäß einer weiteren bevorzugten Ausführungsform der hohlzylindrischen Vorspannpatrone weist deren Einbauspindel benachbart zu dem Antriebsende ein Schaltmerkmal auf, welches mit einem Spindelsensor zusammenwirkt, um einen axialen Versatz der Einbauspindel in einer Installationsrichtung des Drahtgewindeeinsatzes zu erfassen.

Um ein Ergebnis eines Einbauvorgangs eines Drahtgewindeeinsatzes in der Gewindeöffnung des Bauteils möglichst genau erfassen zu können, ist es erforderlich, Informationen über den axialen Versatz des Drahtgewindeeinsatzes in Einbaurichtung zu erhalten. Dieser axiale Versatz ergibt sich aus der Bewegung der Einbauspindel. In Abhängigkeit von der Drehung der Einbauspindel innerhalb des Spindelführungsgewindes der Vorspannpatrone wird der auf dem Installationsende der Einbauspindel angeordnete Drahtgewindeeinsatz in Einbaurichtung bewegt. In Abhängigkeit von den Umdrehungen der Einbauspindel und einer Steigung des inneren Spindelführungsgewindes lässt sich der axiale Versatz des Drahtgewindeeinsatzes in Einbaurichtung bestimmen. Dieser axiale Versatz des Drahtgewindeeinsatzes trägt erst zum Einbau in die Gewindebohrung bei, wenn der Drahtgewindeeinsatz die Vorspannpatrone verlässt oder die ringförmige Stirnseite der Vorspannpatrone in Einbaurichtung passiert. Um den Moment des Passierens des Drahtgewindeeinsatzes bzw. des Installationsendes der Einbauspindel an der ringförmigen Stirnseite der Vorspannpatrone, also das Bewegen des Installationsendes aus dem hohlzylindrischen Inneren der Vorspannpatrone heraus, zu erfassen, ist benachbart zum Antriebsende der Einbauspindel das Schaltmerkmal vorgesehen. Dieses Schaltmerkmal ist ein längenabhängiger Indikator dafür, dass bei seinem Erfassen das Installationsende der Einbauspindel die Vorspannpatrone verlässt. Ein derartiges Schaltmerkmal lässt sich bevorzugt durch eine Schaltkante oder einen Absatz in der Einbauspindel realisieren, welche mithilfe eines induktiven oder eines optischen Sensors erfassbar ist. Sofern also der Sensor diese Schaltkante wahrnimmt bzw. erfasst, ist dies gleichbedeutend mit der Information, dass das Einbauende der Einbauspindel die Vorspannpatrone verlässt.

Diese Information wird dazu verwendet, um ab diesem Erfassungszeitpunkt, also ab dem Verlassen der Vorspannpatrone durch das Installationsende der Einbauspindel, den weiteren axialen Versatz des Drahtgewindeeinsatzes bzw. der Einbauspindel in Einbaurichtung zu bestimmen. Dieser axiale Versatz lässt sich vorzugsweise dadurch ermitteln, dass ein zurückgelegter Drehwinkel der Einbauspindel ab diesem Zeitpunkt erfasst wird. Aus diesem Drehwinkel ergibt sich in Multiplikation mit der Steigung des inneren Spindelführungsgewindes der axiale Weg der Einbauspindel in Einbaurichtung. Da der Drahtgewindeeinsatz am Ende der Einbauspindel, also am Installationsende, auf der Einbauspindel gehalten wird, repräsentiert der erfasste Drehwinkel der Installationsspindel in Kombination mit der Steigung des inneren Spindelführungsgewindes den zurückgelegten Weg des Drahtgewindeeinsatzes in Einbaurichtung. Idealerweise lässt sich mit dieser Information ermitteln, wie weit der Drahtgewindeeinsatz in die Gewindebohrung eingedreht worden ist.

Im Hinblick auf die Sensoren vorliegender Erfindung ist es bevorzugt, dass der erste Erfassungssensor und vorzugsweise ein Spindelsensor ein induktiver Sensor oder ein kapazitiver Sensor oder ein optischer Sensor sind.

Wie bereits oben angesprochen worden ist, werden die Bewegung des Fühlerstifts der mindestens einen taktilen Erfassungseinheit sowie die Bewegung der Einbauspindel mithilfe von Sensoren erfasst. Der Fühlerstift arbeitet zu diesem Zweck mit einem Erfassungssensor zusammen, während die Einbauspindel mit einem Spindelsensor kombiniert wird. Gemäß unterschiedlicher bevorzugter Ausführungsformen vorliegender Erfindung werden diese Sensoren durch induktive oder kapazitive oder optische Sensoren gebildet. Es ist ebenfalls denkbar, dass eine Kombination dieser Messprinzipien genutzt wird, um verlässlich die Bewegung des Fühlerstifts und der Einbauspindel zu erfassen.

Eine weitere bevorzugte Ausgestaltung der hohlzylindrischen Vorspannpatrone weist eine zweite taktile Erfassungseinheit auf, die über die ringförmige Stirnseite der Vorspannpatrone am ersten axialen Ende hinausragt und parallel zu einer Längsachse der Vorspannpatrone versetzbar ist, wobei ein axialer Versatz der zweiten taktilen Erfassungseinheit mit einem zweiten Erfassungssensor der Vorspannpatrone erfassbar ist. Vorzugsweise sind die erste und die zweite taktile Erfassungseinheit um einen Winkel (α) aus dem Bereich von 10° bis 350° zueinander auf der ringförmigen Stirnseite beabstandet. Weiter bevorzugt weist die Vorspannpatrone in einem axialen Abschnitt zwischen der ringförmigen Stirnseite und dem Positionierfenster ein Innengewinde zur Vorinstallation eines Drahtgewindeeinsatzes auf.

Zudem ist es bevorzugt, dass benachbart zum Positionierfenster der Vorspannpatrone ein Innengewinde zum Einschrauben der Einbauspindel mit darauf angeordnetem Drahtgewindeeinsatz vorgesehen ist. Innerhalb dieses Innengewinde wird vorzugsweise der Drahtgewindeeinsatz derart vorgespannt, dass sein Durchmesser für ein erleichtertes Einschrauben in die Gewindebohrung des Bauteils reduziert wird.

Vorliegende Erfindung offenbart zudem ein Installationswerkzeug eines Drahtgewindeeinsatzes mit einem motorischen Antriebsmodule und einem bevorzugten Installationsmodul mit einer Vorspannpatrone gemäß einer der zuvor beschriebenen Ausgestaltungen.

Um die Vorspannpatrone mit ihrer mindestens einen taktilen Erfassungseinheit effektiv nutzen zu können, wird die Vorspannpatrone mit einem motorischen Antriebsmodul gekoppelt. Das Antriebsmodule stellt eine mechanische Verbindung zur Einbauspindel her, sodass diese mit einem Motor des Antriebsmoduls gedreht und damit in Einbaurichtung versetzt werden kann. Vorzugsweise weist das motorische Antriebsmodule einen Schrittmotor oder einen Pressluftmotor oder einen andersgearteten Antrieb für die Einbauspindel auf. Dieser Antrieb stellt ebenfalls bevorzugt die Erfassung des zurückgelegten Drehwinkels sowie weiter bevorzugt des durch die Einbauspindel übertragenen Drehmoments während der Rotation der Einbauspindel bzw. des Antriebsmoduls zur Verfügung. Mit dieser technischen Ausgestaltung ist es möglich, den axialen Versatz des Installationsendes der Einbauspindel nach dem Verlassen der Vorspannpatrone zu bestimmen (siehe oben). Zudem ermöglicht die Erfassung des Drehmoments eine Beurteilung eines Zustands eines Installationsvorgangs. Das Erfassen des Drehwinkels und eines Drehmoments eines motorischen Antriebsmoduls ist im Stand der Technik bekannt, sodass sich diese Funktion ohne Weiteres umsetzen lässt.

In dem Installationswerkzeug ist vorzugsweise die Vorspannpatrone in einem Installationsmodul angeordnet. Gemäß unterschiedlichen bevorzugten Ausgestaltungen der Erfindung ist das Installationsmodul oder die Vorspannpatrone lösbar mit dem Antriebsmodule verbindbar.

Gemäß einer weiteren bevorzugten Ausgestaltung des Installationswerkzeugs ist die Vorspannpatrone lösbar mit dem Antriebsmodul verbindbar. Dies bildet die Grundlage dafür, dass Drahtgewindeeinsätze unterschiedlicher Dimension, also unterschiedlichen Durchmessers, mithilfe des Antriebsmoduls und einer entsprechenden Vorspannpatrone installiert werden können. Denn die Einbauspindel der Vorspannpatrone muss an den zu installierenden Drahtgewindeeinsatz angepasst sein. Entsprechend ist es erforderlich, je nach zu installierendem Drahtgewindeeinsatz die entsprechende Vorspannpatrone mit dem Antriebsmodul zu verbinden und dann die Installation vorzunehmen.

Weiterhin bevorzugt ist das Installationswerkzeug alternativ mit einem Einbauautomaten verbunden, vorzugsweise robotergeführt, oder als Handgerät vorgesehen.

Gemäß unterschiedlicher bevorzugter Ausführungsformen vorliegender Erfindung wird das Installationswerkzeug in Kombination mit einem Einbauautomaten oder als Handgerät genutzt. Die verschiedenen Anwendungsalternativen haben einen Einfluss auf die Ausstattung der bevorzugten Vorspannpatrone mit der Anzahl der taktilen Erfassungseinheiten. Denn in einem bevorzugten Einbauautomaten ist das Installationswerkzeug in seiner Ausrichtung zur Gewindebohrung fest angeordnet. Daher ist aufgrund dieser Anordnung ein Verkippen des Installationswerkzeugs in Bezug auf die Längsachse der Gewindebohrung weitestgehend ausgeschlossen. In diesem Fall ist es somit bevorzugt ausreichend, wenn die Vorspannpatrone mit nur einer taktilen Erfassungseinheit ausgestattet ist. Wird hingegen das Installationswerkzeug als Handgerät genutzt, kann dies eher zu einer nicht koaxialen Ausrichtung der Längsachse der Einbauspindel zu einer Längsachse der Gewindebohrung führen. In diesem Fall ist es erfindungsgemäß bevorzugt, wenn die Vorspannpatrone mindestens zwei taktile Erfassungseinheiten aufweist, um eine eventuelle winklige Ausrichtung zwischen der Längsachse des Installationswerkzeugs und der Längsachse der Gewindebohrung zu vermeiden. Aber auch in Bezug auf Handgeräte ist es bevorzugt, diese mit nur einer taktilen Erfassungseinheit auszustatten, da auf dieser konstruktiven Grundlage ebenfalls ein verlässlicher Betrieb des Installationswerkzeugs gewährleistet ist.

Gemäß einer weiteren bevorzugten Ausgestaltung des Installationswerkzeugs weist es ein Steuergerät auf, mit dem Daten von mindestens einem Erfassungssensor des Installationswerkzeugs empfangbar und auswertbar sind.

Mithilfe des erfindungsgemäß bevorzugten Steuergeräts des Installationswerkzeugs werden vorzugsweise die von den verwendeten Sensoren erfassten Daten gesammelt und ausgewertet. Zu diesen Sensoren zählen bevorzugt mindestens ein Erfassungssensor der mindestens einen taktilen Erfassungseinheit sowie der Spindelsensor zur Überwachung der axialen Bewegung der Einbauspindel des Installationswerkzeugs. Zudem ist es bevorzugt, dass das Steuergerät von dem motorischen Antriebsmodul Daten über den zurückgelegten Drehwinkel des Antriebs und somit der Installationsspindel erhält. Gemäß einer weiteren bevorzugten Ausgestaltung des Installationswerkzeugs übermittelt das motorische Antriebsmodul Informationen über das durch die Einbauspindel an den Drahtgewindeeinsatz übertragene Drehmoment an das Steuergerät. Das durch die Einbauspindel aufgebrachte Drehmoment gibt einen Hinweis darauf, ob der Drahtgewindeeinsatz problemlos in das Innengewinde der Gewindebohrung eingedreht werden konnte oder ob während dieses Eindrehens bzw. Installierens des Drahtgewindeeinsatzes in der Gewindebohrung Einbaufehler aufgetreten sind. Denn derartige Einbaufehler führen zu einer Steigerung des Drehmoments, da der Drahtgewindeeinsatz das vorgegebene Innengewinde der Gewindeöffnung während der Installation verlässt. In gleicher Weise dient auch die Erfassung eines zu niedrigen Drehmoments zur Interpretation des Ergebnisses des Installationsvorgangs. Denn ein unterhalb eines vorgegebenen Schwellenwerts liegendes Drehmoment weist darauf hin, dass der auf der Einbauspindel befindliche Drahtgewindeeinsatz gar nicht in die Gewindebohrung eingedreht worden ist.

Vorliegende Erfindung offenbart zudem einen Nachrüstsatz für ein Installationswerkzeug eines Drahtgewindeeinsatzes mit einem miteinander lösbar verbindbaren Antriebsmodul und einer Vorspannpatrone angepasst an einen Drahtgewindeeinsatz, der mindestens zwei Vorspannpatronen gemäß einer der vorhergehend beschriebenen Ausführungsformen vorliegender Erfindung, die sich in einer Konstruktion und/oder Dimension der Einbauspindel oder der Vorspannpatrone unterscheiden.

Gängige Installationswerkzeuge setzen sich ebenfalls aus einem motorischen Antriebsmodul und einer Vorspannpatrone zusammen. Um diese bekannten und bereits vorhandenen Antriebsmodule mit zusätzlichen technischen Eigenschaften als Installationswerkzeug nutzen zu können, wird ein Nachrüstsatz mit einer Mehrzahl von Vorspannpatronen gemäß der verschiedenen bevorzugten Ausführungsformen vorliegender Erfindung bereitgestellt. Diese Vorspannpatronen, die jeweils lösbar mit dem vorhandenen Antriebsmodul verbindbar sind, lassen sich an die vorhandenen motorischen Antriebsmodule ankoppeln, um die Funktonalität vorliegender Erfindung zu realisieren. Somit umfasst bevorzugt ein Nachrüstsatz mindestens zwei Vorspannpatrone gemäß den verschiedenen bevorzugten Ausgestaltungen vorliegender Erfindung.

Sollte das motorische Antriebsmodul nicht bereits über ein Steuergerät zur Auswertung von Sensordaten verfügen, ist es ebenfalls bevorzugt, das bekannte motorische Antriebsmodul mit einem zusätzlichen Steuergerät gemäß den obigen Eigenschaften auszustatten.

Vorliegende Erfindung offenbart zudem ein Installationsverfahrens für einen Drahtgewindeeinsatz in einer Gewindebohrung eines Bauteils mit einem Installationswerkzeug, insbesondere ein Installationswerkzeug gemäß einer der obigen Ausführungsformen, welches die folgenden Schritte aufweist: Vorinstallieren eines Drahtgewindeeinsatzes auf einer Einbauspindel in einer Vorspannpatrone des Installationswerkzeugs, Anordnen des Installationswerkzeugs mit dem vorinstallierten Drahtgewindeeinsatz benachbart zu einem Eingang einer Gewindebohrung in einer annähernd koaxialen Ausrichtung der Einbauspindel zu einer Längsachse der Gewindebohrung, axiales Bewegen des Drahtgewindeeinsatzes mit der Einbauspindel in einer Einbaurichtung in die Gewindebohrung durch Drehen der Einbauspindel, insbesondere durch ein Führen der sich drehenden Einbauspindel in einem inneren Spindelführungsgewinde einer Vorspannpatrone, Erfassen während des Drehens der Einbauspindel einen zurückgelegten Drehwinkel der Einbauspindel, aus dem durch Multiplikation mit einer Steigung eines Spindelgewindes der Einbauspindel eine Einbautiefe eines Drahtgewindeeinsatzes in der Gewindeöffnung abschätzbar ist, Beenden des Drehens der Einbauspindel nach einem zurückgelegten vorgegebenen Drehwinkel der Einbauspindel und Abfragen mindestens einer taktilen Erfassungseinheit, die über eine ringförmige Stirnseite der Vorspannpatrone hinaus ragt, nach einem Abstand zwischen der ringförmigen Stirnseite und dem Bauteil.

Das erfindungsgemäße Installationsverfahren für einen Drahtgewindeeinsatz baut auf bekannte Vorgehensweisen bei der Installation auf. Denn auch mit dem erfindungsgemäß bevorzugten Installationsverfahren wird zunächst der Drahtgewindeeinsatz in der Vorspannpatrone auf der Einbauspindel vorgespannt und nachfolgend wird mit dem Eindrehen des Drahtgewindeeinsatzes in die Gewindebohrung begonnen. Um den Installationsvorgang des Drahtgewindeeinsatzes verlässlich bewerten zu können, wird ab dem Verlassen der Vorspannpatrone durch den Drahtgewindeeinsatz in axialer Einbaurichtung der zurückgelegte Drehwinkel der Einbauspindel erfasst. Der zurückgelegte Drehwinkel gibt indirekt Auskunft über den durch den Drahtgewindeeinsatz in axialer Einbaurichtung zurückgelegten Weg des Drahtgewindeeinsatzes. Das bedeutet, dass bei sofortigem Eintreten des Drahtgewindeeinsatzes in die Gewindebohrung der mit Drehung der Einbauspindel zurückgelegte Drehwinkel der Einbauspindel die Einbautiefe des Drahtgewindeeinsatzes repräsentiert. Auf diese Weise ist es möglich, im Vorfeld eines Installationsvorganges eine gewünschte Einbautiefe vorzugeben, in welcher der Drahtgewindeeinsatz vorzugsweise mindestens installiert werden soll.

Da mit dem Verlassen der Vorspannpatrone der Drahtgewindeeinsatz trotz Drehung und axialer Bewegung der Einbauspindel nicht sofort in das Innengewinde der Gewindeöffnung des Bauteils einläuft, wird erfindungsgemäß bevorzugt parallel zur Erfassung des Drehwinkels der Einbauspindel spätestens nach Abschluss des Eindrehvorgangs des Drahtgewindeeinsatzes die Größe eines Abstands zwischen der ringförmigen Stirnseite der Vorspannpatrone angrenzend an das benachbarte Bauteil und der angrenzenden Bauteiloberfläche des benachbarten Bauteils abgefragt. Dieser Abstand muss erfindungsgemäß bevorzugt in einem vordefinierten Toleranzbereich liegen oder darf einen vorgegebenen Grenzwert nicht überschreiten, um zu gewährleisten, dass der Drahtgewindeeinsatz basierend auf dem zurückgelegten Drehwinkel der Einbauspindel ausreichend tief in die Gewindebohrung des Bauteils eingedreht worden ist. Dieser Abstand wird mithilfe einer taktilen Erfassungseinheit erfasst, welche mit einem bevorzugten Fühlerstift über die ringförmige Stirnseite der Vorspannpatrone in Richtung Bauteil in Einbaurichtung hinausragt. Da dieser bevorzugte Fühlerstift in Einbaurichtung federvorgespannt ist, sorgt ein Kontakt zwischen Fühlerstift und Bauteiloberfläche für eine erfassbare Auslenkung des Fühlerstift in oder entgegen der Einbaurichtung. Auf diese Weise ist es möglich, dass der Abstand zwischen der ringförmigen Stirnfläche der Vorspannpatrone und der gegenüberliegenden Bauteiloberfläche erfasst werden kann.

Somit endet das erfindungsgemäße Installationsverfahren des Drahtgewindeeinsatzes damit, dass nach einem zurückgelegten Drehwinkel der Einbauspindel mithilfe einer bevorzugten Steuereinheit bzw. eines bevorzugten Steuergeräts abgefragt wird, ob der Abstand zwischen der ringförmigen Stirnseite der Vorspannpatrone und der gegenüberliegenden Bauteiloberfläche in einem vorgegebenen Abstandsbereich liegt oder unterhalb eines vorgegebenen absoluten Abstands liegt, um einen Installationsvorgang des Drahtgewindeeinsatzes als in Ordnung abzuschließen.

Gemäß einer bevorzugten Ausführungsform des obigen Installationsverfahrens weist dieses den weiteren Schritt auf: Bewerten des erfassten Abstands der mindestens einen taktilen Erfassungseinheit, ob dieser innerhalb oder außerhalb eines vorgegebenen Abstandsbereichs liegt.

Weiterhin bevorzugt wird der folgende weitere Verfahrensschritt genutzt: Ermitteln eines absoluten Abstands durch Abfragen der mindestens einen taktilen Erfassungseinheit und Bewerten, ob der absolute Abstand innerhalb oder außerhalb eines vorgegebenen Abstandsbereichs liegt.

Gemäß einer bevorzugten Ausführungsform des erfindungsgemäßen Installationsverfahrens wird der Abstand zwischen der ringförmigen Stirnseite der Vorspannpatrone und der gegenüberliegenden Bauteiloberfläche qualitativ oder quantitativ erfasst, um auf dieser Grundlage zu bewerten, ob die Installation des Drahtgewindeeinsatzes in der Gewindebohrung in Ordnung ist oder nicht. Bei einer quantitativen Erfassung des Abstandes zwischen der ringförmigen Stirnseite der Vorspannpatrone und der Bauteiloberfläche erfasst die taktile Erfassungseinheit den genauen Abstand bzw. die genaue Distanz zwischen der Stirnseite der Vorspannpatrone und der gegenüberliegenden Bauteiloberfläche. Dies ist bevorzugt mit einem federvorgespannten Fühlerstift in Kombination mit einem Erfassungssensor technisch realisierbar. Dieses Vorgehen bildet die Grundlage dafür, wenn in einem angeschlossenen bevorzugten Steuergerät ein maximaler Abstand hinterlegt ist und dieser nicht überschritten werden darf. In diesem Fall würde innerhalb des Steuergeräts ein Vergleich zwischen dem hinterlegten Maximalabstand und dem gemessenen absoluten Abstand erfolgen.

Selbst wenn die taktile Erfassungseinheit den Abstand zwischen der ringförmigen Stirnseite der Vorspannpatrone und der gegenüberliegenden Bauteiloberfläche absolut bestimmen würde, ist es bevorzugt, im Rahmen der Beurteilung des Installationsvorgangs nur eine qualitative Auswertung im Hinblick auf einen vorliegenden akzeptablen oder inakzeptablen Abstand vorzunehmen. Das bedeutet, dass die taktile Erfassungseinheit in Kombination mit dem Steuergerät die Information ausgibt, ob sich ein Abstand in einem zulässigen Abstandsbereich befindet oder nicht. Entsprechend würde dann die Information erfolgen, ob der Installationsvorgang des Drahtgewindeeinsatzes in Ordnung ist oder nicht.

Während der Installation eines Drahtgewindeeinsatzes ist es zudem bevorzugt, dass ein Drehmoment der Einbauspindel während des Drehens der Einbauspindel beim axialen Bewegen des Drahtgewindeeinsatzes in die Gewindeöffnung erfasst wird.

Gemäß einer weiteren bevorzugten Ausgestaltung des erfindungsgemäßen Installationsverfahrens des Drahtgewindeeinsatzes wird ein durch die Einbauspindel genutztes Drehmoment während der Installation des Drahtgewindeeinsatzes ausgewertet. Dabei geht es primär nicht um die absolute Bestimmung des genutzten Drehmoments während der Installation. Vielmehr soll anhand dieser Auswertung qualitativ festgestellt werden, ob eine verlässliche Installation des Drahtgewindeeinsatzes in der Gewindebohrung des Bauteils stattgefunden hat. Denn es ist möglich, dass der Drahtgewindeeinsatz beim Start des Installationsvorgangs nicht in das Innengewinde der Gewindebohrung einläuft und daher nicht installiert wird. Dies ist daran erkennbar, dass das durch die Einbauspindel aufgebrachte Drehmoment zu klein ist, um tatsächlich ein Eindrehen des Drahtgewindeeinsatzes in das Innengewinde der Gewindebohrung zu repräsentieren. Würde ein erfasstes Drehmoment der Einbauspindel einen vordefinierten Schwellenwert überschreiten, wäre dies ein Hinweis darauf, dass ein Fehler oder ein Problem beim Eindrehen des Drahtgewindeeinsatzes in das Innengewinde der Bauteilöffnung aufgetreten ist. Dies könnte beispielsweise dann der Fall sein, wenn sich der Drahtgewindeeinsatz während des Eindrehens in der Gewindebohrung verklemmt hat. Auch in diesem Fall wäre der Installationsvorgang nicht in Ordnung und müsste nach bevorzugtem Entfernen des Drahtgewindeeinsatzes aus der Gewindebohrung wiederholt werden.

Darauf aufbauend wird daher vorzugsweise in einem weiteren Schritt des Installationsverfahrens das Bewegen der Einbauspindel in Einbaurichtung unterbrochen, wenn ein erstes vorgegebenes Drehmoment überschritten ist, und/oder wenn ein zweites vorgegebenes Drehmoment nicht erreicht wird.

Gemäß einer weiteren bevorzugten Ausgestaltung des Installationsverfahren wird in einem weiteren Schritt mindestens eine der folgenden Größen auf einem Display angezeigt: das Drehmoment der Einbauspindel, der zurückgelegte Drehwinkel der Einbauspindel und ein Abstand erfasst durch die mindestens eine taktile Erfassungseinheit.

Gemäß unterschiedlichen bevorzugten Anwendungsmöglichkeiten des erfindungsgemäßen Installationsverfahrens wird dieses in Kombination mit einem Einbauautomaten oder in Kombination mit einem Handgerät zur Installation eines Drahtgewindeeinsatzes in einer Gewindebohrung eines Bauteils genutzt. Während der Einbauautomat die Datenauswertung der genutzten Sensoren vorzugsweise automatisch vornimmt und diese Daten auch automatisch interpretiert, ist nicht zwingend eine Anzeige dieser Daten beispielsweise auf einem Display erforderlich.

Wird hingegen das Installationsverfahren in Kombination mit einem Handgerät durch einen Werker verwendet, werden diesem vorzugsweise relevante Sensordaten zur Interpretation, Information und/oder Auswertung durch den Werker auf einem Display angezeigt. Dieses Display zeigt vorzugsweise qualitative Daten an. Dies bedeutet, dass mithilfe eines i.O. oder eines n.i.O. Symbols signalisiert wird, ob ein Abstand und/oder ein Drehmoment während der Installation und/oder der gesamte Installationsvorgang in Ordnung oder nicht in Ordnung ist. In gleicher Weise ist es bevorzugt, dass man dem Werker während und/oder nach der Installation Absolutwerte für den Abstand zwischen Bauteiloberfläche und ringförmiger Stirnseite der Vorspannpatrone und/oder für den zurückgelegten Drehwinkel oder den axialen Versatz der Einbauspindel und/oder für das durch die Einbauspindel aufgebrachte Drehmoment während der Installation auf dem Display anzeigt. Diese Anzeige gibt dem Werker die Möglichkeit, anhand bekannter zu erzielender Werte für Abstand, Drehmoment, Einbautiefe zu beurteilen, ob eine Installation des Drahtgewindeeinsatzes erfolgreich war oder nicht.

### 4. Kurze Beschreibung der begleitenden Zeichnungen

Die bevorzugten Ausführungsformen vorliegender Erfindung werden unter Bezugnahme auf die begleitenden Zeichnungen näher erläutert. Es zeigen:
- Figur 1: eine bevorzugte Ausführungsform eines Installationswerkzeugs in einer teilweisen, perspektivischen Schnittdarstellung bestehend aus einem Antriebsmodule und einem Installationsmodul,

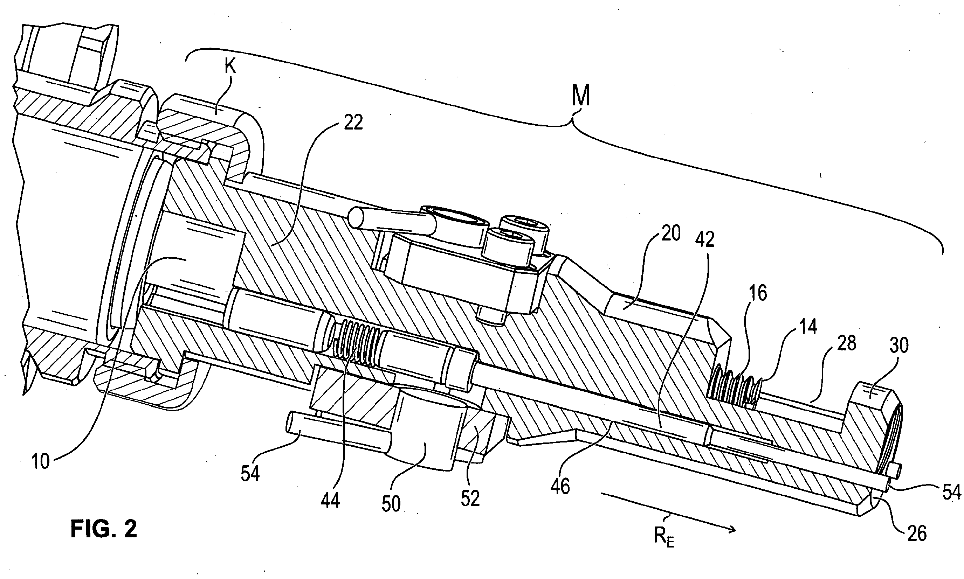

- Figur 2: eine bevorzugte Ausführungsform des Installationsmoduls in einer vergrößerten perspektivischen Schnittansicht,
- Figur 3: eine bevorzugte Ausführungsform des Installationsmoduls in einer weiteren vergrößerten perspektivischen Schnittansicht,

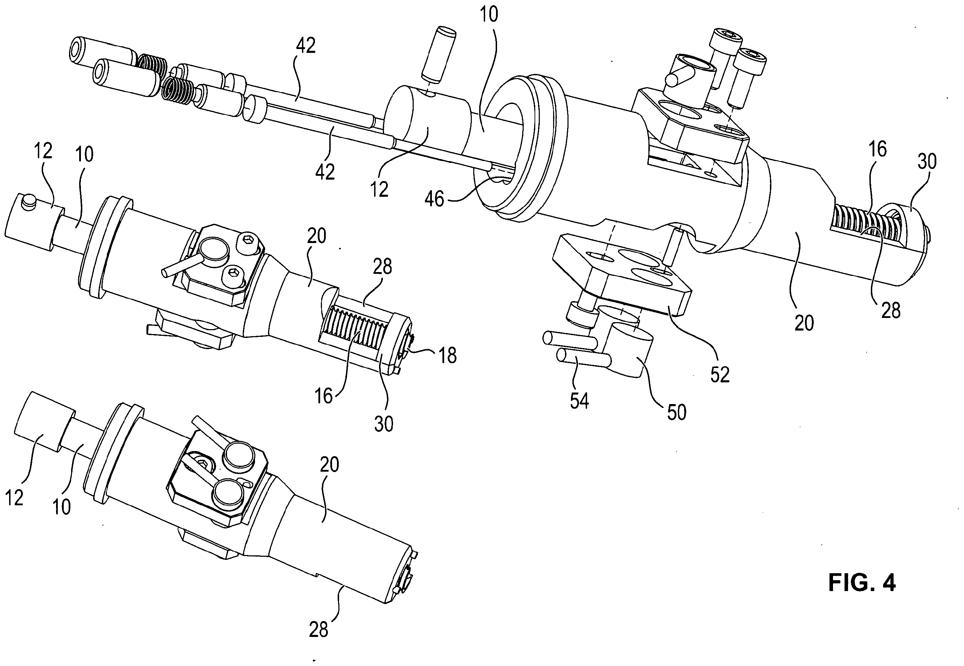

- Figur 4: eine bevorzugte Ausführungsform des Installationsmoduls in einer Explosionsdarstellung,

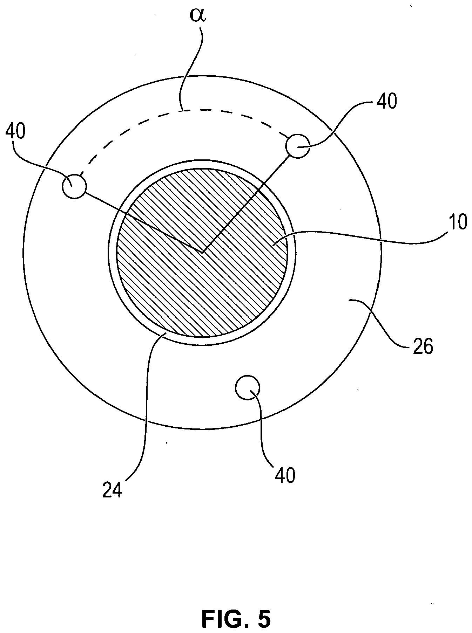

- Figur 5: eine schematische Draufsicht auf die Aufsetzstimfläche mit taktilen Erfassungseinheiten,
- Figur 6 a-d: eine Darstellung einer bevorzugten Sequenz von Installationsschritten eines Drahtgewindeeinsatzes in einer Gewindeöffnung eines Bauteils,
- Figur 7 a-d: eine Darstellung einer bevorzugten Sequenz von Installationsschritten eines Drahtgewindeeinsatzes in einer Gewindeöffnung eines Bauteils anschließend an die Schritte der Figur 6 und
- Figur 8: ein Flussdiagramm einer weiteren bevorzugten Ausführungsform eins Installationsverfahrens eines Drahtgewindeeinsatzes mit dem bevorzugten Installationswerkzeug.

### 5. Detaillierte Beschreibung der bevorzugten Ausführungsformen

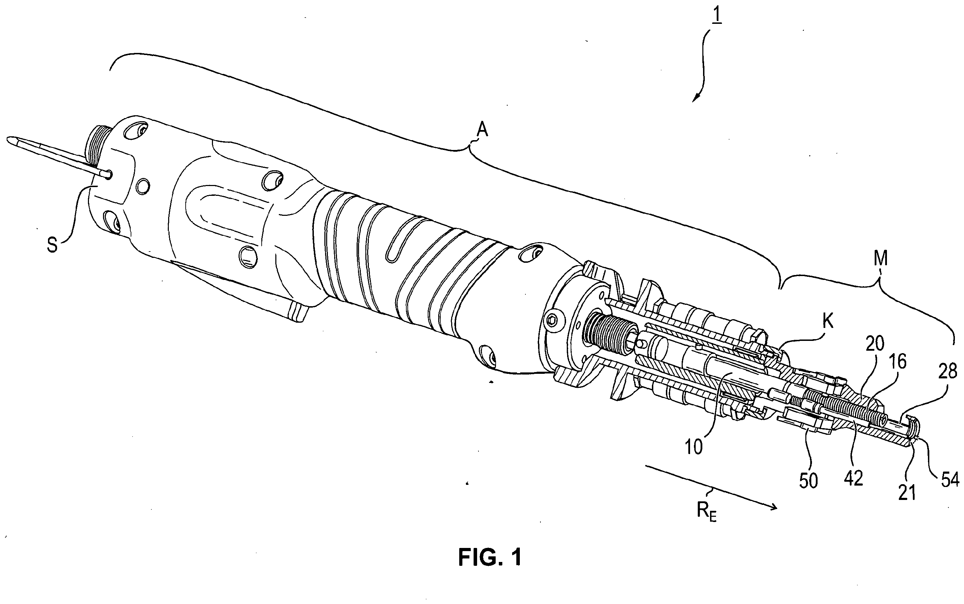

In Figur 1 ist eine bevorzugte Ausführungsform eines Installationswerkzeugs 1 gezeigt. Mithilfe des Installationswerkzeugs 1 wird ein Drahtgewindeeinsatz D in einer Bohrung G mit Innengewinde eines Bauteils B installiert. Derartige Installationswerkzeuge bestehen aus einem motorisch angetriebenen Antriebsmodul A und einem Installationsmodul M mit einer Vorspannpatrone 20. Das motorische Antriebsmodul A stellt eine Drehbewegung für das Installationsmodul M bereit, die gemäß unterschiedlichen bevorzugten Ausgestaltungen vorliegender Erfindung mit einem Elektromotor oder einem Pneumatikmotor erzeugt wird. Ebenfalls bevorzugt sind das Antriebsmodul A und das Installationsmodul M mit Vorspannpatrone 20 lösbar oder fest miteinander verbunden. Ein lösbar miteinander verbundenes Antriebsmodul A und Installationsmodul M hat den Vorteil, dass in ihrer Dimension an unterschiedliche Größen von Drahtgewindeeinsätzen D angepasste Installationsmodule M austauschbar mit dem Antriebsmodul A verbindbar sind.

Eine derartige Konstruktion eines Installationswerkzeugs 1 für Drahtgewindeeinsätze D ist im Stand der Technik bekannt.

Zudem sind diese Installationswerkzeuge 1 angepasst, um unterschiedliche Konstruktionen von Drahtgewindeeinsätzen D zu installieren. Diese Drahtgewindeeinsätze D weisen beispielsweise einen entfernbaren Einbauzapfen, eine Installationskerbe oder einen zurückbiegbaren Einbauzapfen auf.

Das erfindungsgemäße Installationswerkzeug 1 eignet sich zur Installation dieser verschiedenen Drahtgewindeeinsätze.

Das Installationsmodul M mit der Vorspannpatrone ist über eine mechanische Kopplung K mit dem Antriebsmodul A lösbar verbunden. Diese Verbindung zwischen Antriebsmodul A und Installationsmodul M stellt eine Verbindung zwischen einem Motor des Antriebsmoduls A und einer Einbauspindel 10 der Vorspannpatrone M her. Dadurch wird eine Drehbewegung des Motors auf die Einbauspindel 10 übertragen, um den Drahtgewindeeinsatz D zu installieren oder die Einbauspindel 10 aus der Gewindebohrung G zu entfernen. Zudem umfasst das Installationsmodul elektrische Leitungen und/oder Anschlüsse, um einen bevorzugten Sensor der Vorspannpatrone und/oder Kommunikationsleitungen der Vorspannpatrone mit einem Steuergerät des Installationswerkzeugs zu verbinden.

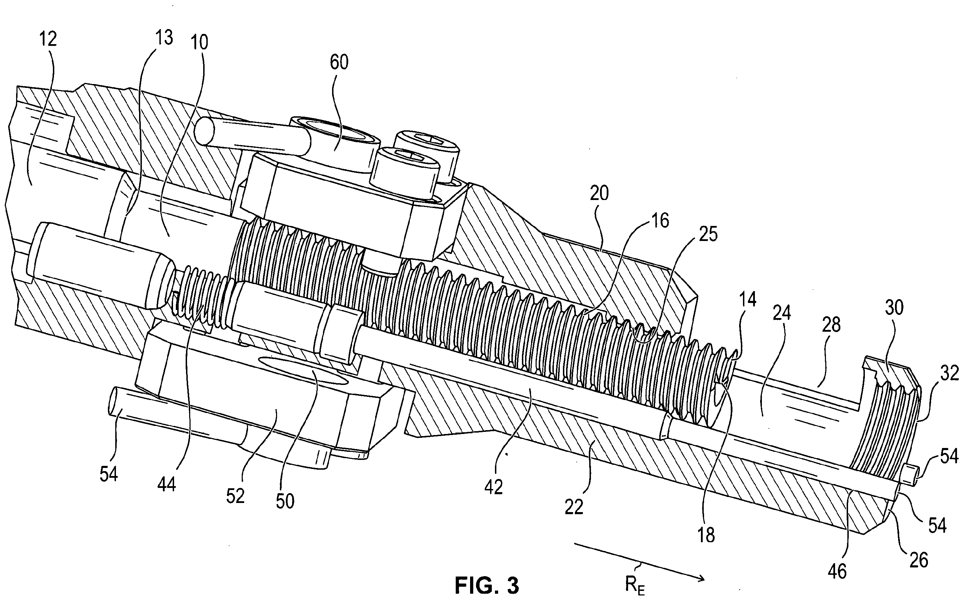

Die Einbauspindel 10 hat ein Antriebsende 12, um mit dem Motor bzw. dem Antriebsmodul A verbunden zu werden. An einem Installationsende 14 der Einbauspindel 10 ist ein Installationsgewinde 16 vorgesehen, auf welches ein zu installierender Drahtgewindeeinsatz D aufspindelbar ist. Ebenfalls am Installationsende 14 ist die Einbauspindel 10 angepasst, um mit einem Drahtgewindeeinsatz D in Eingriff zu gelangen. So weist beispielgebend die Einbauspindel 10 der Figur 3 einen radialen endseitigen Vorsprung 18 auf, um über einen Einbauzapfen (nicht gezeigt) einen Drahtgewindeeinsatz D beim Eindrehen in die Gewindebohrung G drehfest zu halten.

Die Einbauspindel 10 ist in der Vorspannpatrone 20 angeordnet. Der grundlegende Aufbau und die Funktion der Vorspannpatrone 20 sind im Stand der Technik bekannt. Die Vorspannpatrone 20 ist hohlzylindrisch aufgebaut und hat eine umlaufende Wand 22. Innerhalb der hohlzylindrischen Vorspannpatrone 20 ist ein Spindelkanal 24 vorgesehen, in welchem die Einbauspindel 10 verläuft. Vorzugsweise ist der Spindelkanal 24 koaxial zu einer Mittellängsachse der Vorspannpatrone 20 angeordnet.

Innerhalb des Spindelkanals 24 ist an der radialen Innenwand ein Spindelführungsgewinde 25 vorgesehen. Das Spindelführungsgewinde 25 ist passend zum Gewinde 16 der Einbauspindel 10 ausgebildet.

Da eine Steigung des Spindelführungsgewindes 25 bekannt ist, lässt sich aus einem durch die Einbauspindel 10 zurückgelegten Drehwinkel und einer Steigung des Spindelführungsgewindes 25 und/oder des Gewindes 16 ein axialer Versatz der Einbauspindel 10 berechnen. Dazu werden die Steigung und die Umdrehung der Einbauspindel 10 multipliziert.

Die Einbauspindel 10 ist in ihrer Länge auf die Vorspannpatrone 20 abgestimmt. Verlässt das Installationsende 14 der Einbauspindel 10 den Vorspannring 30 in Einbaurichtung R_{E}, bewegt sich gleichzeitig ein Schaltmerkmal 13 der Einbauspindel 10 an einem Spindelsensor 60 vorbei. Der Spindelsensor 60 ist vorzugsweise als induktiver oder optischer oder kapazitiver Sensor ausgebildet. Das Schaltmerkmal 13 ist bevorzugt eine Schaltkante in der Konstruktion der Einbauspindel 10 oder ein induktiv oder kapazitiv oder optisch erfassbares Merkmal.

Da die Einbauspindel 10 im Spindelkanal 24 angeordnet ist, erfasst der Spindelsensor 60 vorzugsweise das Schaltmerkmal 13 von der radialen Außenseite oder der radialen Innenseite der Vorspannpatrone 20. Es ist ebenfalls bevorzugt, den Spindelsensor 60 in der Wand 22 der Vorspannpatrone 20 anzuordnen.

Der Spindelsensor 60 ist gemäß einer bevorzugten Ausgestaltung vorliegender Erfindung mit einem Steuergerät S des Installationswerkzeugs 1 verbunden oder verbindbar. Wird die Vorspannpatrone 20 als Nachrüstsatz (siehe unten) bereitgestellt, ist es bevorzugt, dass Vorspannpatronen 20 unterschiedlicher Einbauspindelkonstruktionen und/oder -dimensionen jeweils mit dem Steuergerät S des Antriebsmoduls A oder des Installationswerkzeugs 1 verbindbar sind.

Das Steuergerät S empfängt die Daten des Spindelsensors 60 und vorzugsweise weiterer Sensoren, wie beispielsweise mindestens eines Erfassungssensors 50 der mindestens einen taktilen Erfassungseinheit 40. Zudem werden an das Steuergerät S bevorzugt Daten des Antriebsmoduls A übermittelt. Dazu zählt vorzugsweise ein durch einen Motor des Antriebsmoduls A aufzubringendes Drehmoment, um die Einbauspindel 10 zu drehen und einen Drahtgewindeeinsatz einzubauen. Weiterhin bevorzugt erfasst das Antriebsmodul A einen durch die Einbauspindel 10 zurückgelegten Drehwinkel und übermittelt diese Daten an das Steuergerät S. Aus einem zurückgelegten Drehwinkel der Einbauspindel 10 wird bevorzugt durch Multiplikation mit der Steigung des Spindelführungsgewindes 25 der axiale Versatz des Installationsendes 14 der Einbauspindel 10 bestimmt.

An einem dem Antriebsmodul A abgewandten axialen Ende 21 der Vorspannpatrone 20 ist eine ringförmige Aufsetzstirnfläche oder allgemein Stirnfläche 26 vorgesehen. Vorzugsweise ist die Aufsetzstimfläche 26 in einer Radialebene senkrecht zur Längsachse der Einbauspindel 10 angeordnet. Die ringförmige Stirnfläche 26 setzt während der unten beschriebenen Installation eines Drahtgewindeeinsatzes D nicht zwingend auf der benachbarten Oberfläche O_{B} des Bauteils B auf.

Benachbart zu dem axialen Ende 21 weist die Vorspannpatrone 20 ein radiales Positionierfenster 28 auf. Bekannterweise wird durch das radiale Positionierfenster 28 ein Drahtgewindeeinsatz D in der Vorspannpatrone 20 angeordnet. Nachfolgend wird der Drahtgewindeeinsatz D auf das Gewinde 16 der Einbauspindel 10 aufgespindelt, um dann in einen Vorspannring 30 mit Innengewinde 32 der Vorspannpatrone 20 eingedreht und in diesem vorgespannt zu werden. Aus dem Vorspannring 30 wird später der Drahtgewindeeinsatz D in das Innengewinde der Gewindebohrung G eingedreht.

Die ringförmige Aufsetzstimfläche 26 verläuft konzentrisch um die Mittellängsachse der Einbauspindel 10. Gemäß einer bevorzugten Ausführungsform vorliegender Erfindung liegt sie in einer Radialebene senkrecht zur Mittellängsachse der Einbauspindel 10.

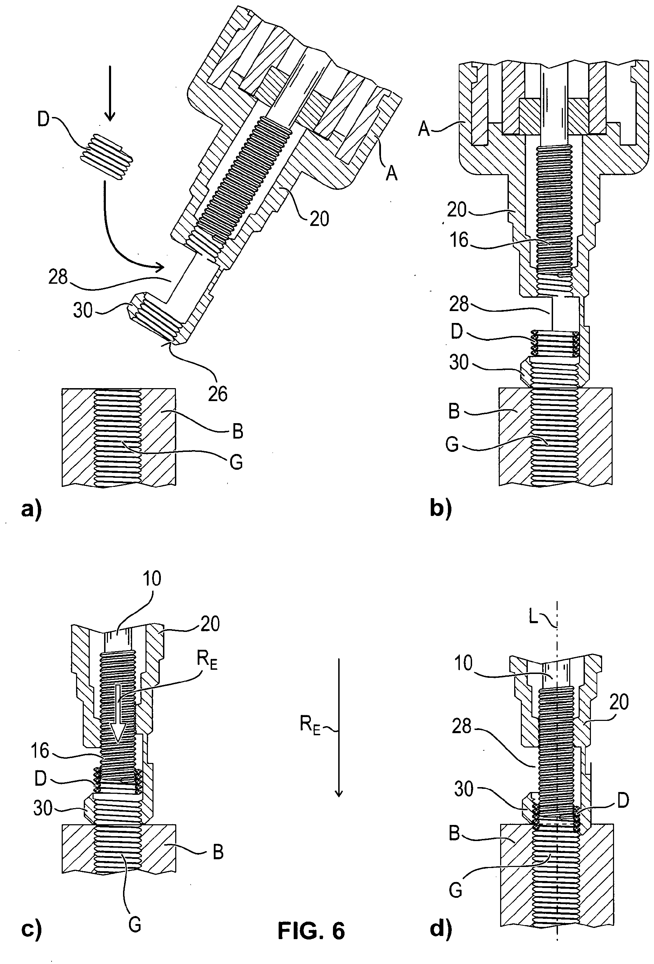

Um den in der Vorspannpatrone 20, insbesondere im Vorspannring 30, vorinstallierten Drahtgewindeeinsatz (Schritt S1) in die Gewindebohrung G eindrehen zu können, wird das Installationswerkzeug 1 benachbart zur Gewindebohrung G eines Bauteils B angeordnet. Dazu wird bevorzugt das Installationswerkzeug 1, insbesondere die Mittellängsachse der Einbauspindel 10, annähernd koaxial zur Mittellängsachse der Gewindebohrung G ausgerichtet (siehe Figuren 6 c-d).

Es wird davon ausgegangen, dass die Gewindebohrung G senkrecht zu der Bauteiloberfläche O_{B} verläuft, die an die Aufsetzstimfläche 26 angrenzt oder benachbart dazu angeordnet ist. Entsprechend ist es erfindungsgemäß bevorzugt, wenn das Installationswerkzeug 1 ebenfalls annähernd senkrecht zur angrenzenden Bauteiloberfläche O_{B} angeordnet ist.

Die Vorspannpatrone 20 umfasst bevorzugt die mindestens eine taktile Erfassungseinheit 40 vorzugsweise bestehend aus einem Fühlerstift 42 und einem Erfassungssensor 50. Der Fühlerstift 42 ist in einer Führung oder einem Kanal 46 in der Wand 22 der Vorspannpatrone 20 geführt. Ein Kontaktende 54 des Fühlerstifts 42 ist bevorzugt in Einbaurichtung R_{E} federvorgespannt und ragt über die ringförmige Stirnseite 26 hinaus. Kommt das Kontaktende 54 in Kontakt mit einer benachbarten Bauteiloberfläche O_{B}, wird der Fühlerstift 42 gegen eine Kraft einer bevorzugten Feder entgegen der Einbaurichtung R_{E} ausgelenkt. Die Auslenkung des Fühlerstifts 42 erfasst der mindestens eine Erfassungssensor 50 und übermittelt die Daten bevorzugt an das Steuergerät S.

Wird ein Drahtgewindeeinsatz mit dem Installationswerkzeug 1 in der Gewindebohrung G eines Bauteils B installiert, stützt sich der Fühlerstift 42 mit dem Kontaktende 54 an der benachbarten Bauteiloberfläche O_{B} ab. Die damit verbundene axiale Auslenkung des Fühlerstifts 42 wird von dem Erfassungssensor 50 erfasst und an das Steuergerät S übermittelt. Die vom Erfassungssensor 50 an das Steuergerät S übermittelten Daten beschreiben den Abstand zwischen der ringförmigen Stirnseite 26 der Vorspannpatrone 20 und der Bauteiloberfläche O_{B} des Bauteils B mit Gewindebohrung G.

Vorzugsweise wird mit dem Erfassungssensor 50 der Abstand absolut bestimmt. Gemäß einer weiteren bevorzugten Ausführungsform vorliegender Erfindung wird ermittelt, ob der erfasste Abstand einen Maximalabstand überschreitet oder nicht. Dies entspricht somit einer qualitativen Abstandsbestimmung, die vorzugsweise nicht die Angabe eines genauen Abstandswerts voraussetzt.

Konstruktive Ausgestaltungen der Vorspannpatrone 20, die allgemein auch als Installationsmodul bezeichnet ist, welche in Kombination mit weiteren bevorzugten Ausführungsformen vorliegender Erfindung beschrieben sind, gelten in gleicher Weise für die oben beschriebene Vorspannpatrone 20 und ihre Merkmale.

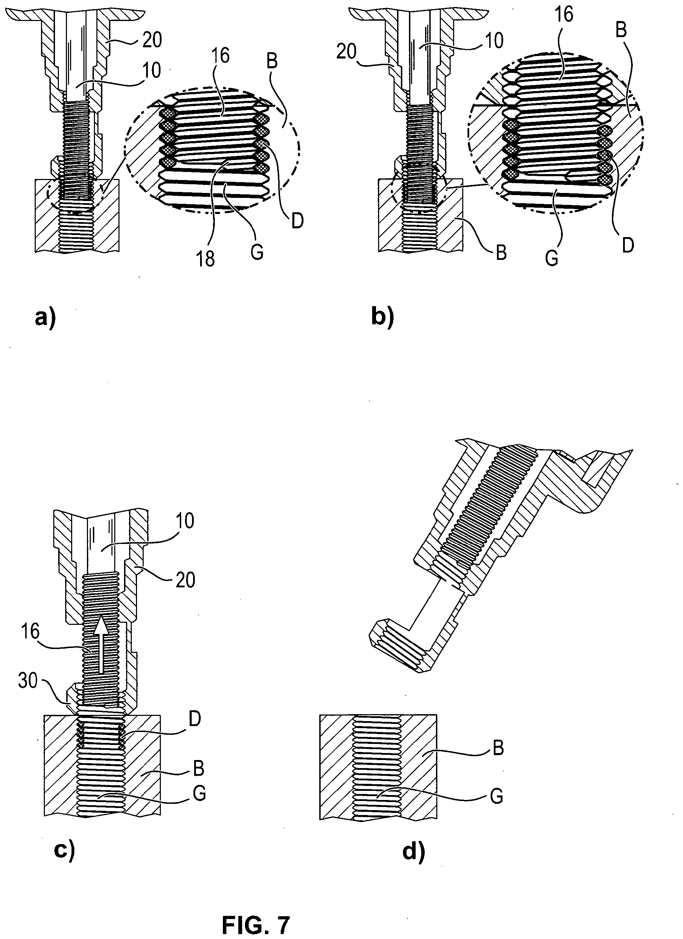

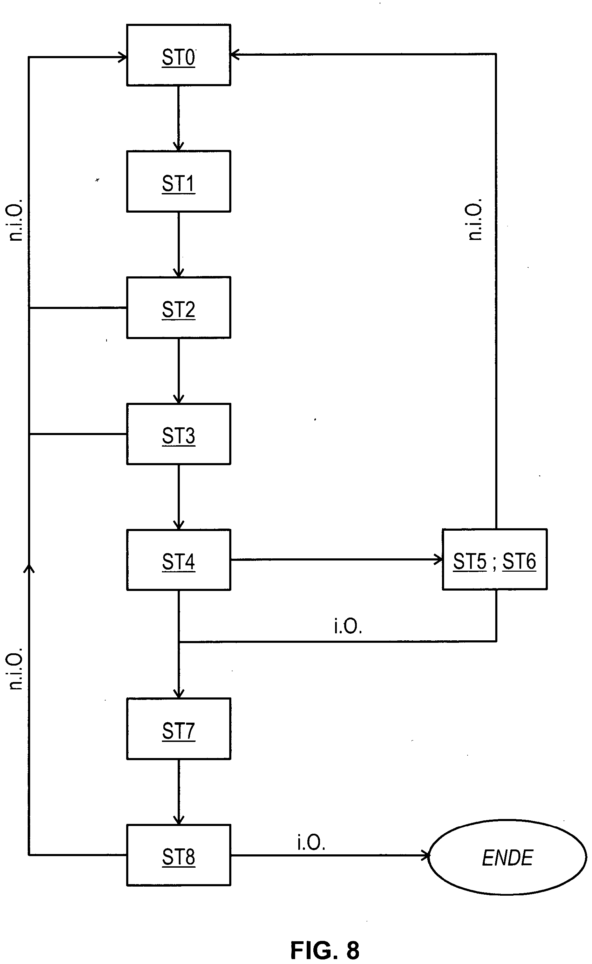

Das erfindungsgemäß bevorzugte Installationsverfahrens des Drahtgewindeeinsatzes D wird unter Bezugnahme auf das Flussdiagramm der Figur 8 sowie die Darstellungen der Figuren 6 und 7 näher erläutert. Das Installationsverfahrens wird vorzugsweise durch die oben beschriebene Vorspannpatrone 20 in ihren bevorzugten Ausführungsformen in Kombination mit dem Antriebsmodule A durchgeführt. Gemäß einer bevorzugten Ausführungsform vorliegender Erfindung wird das Installationsverfahrens mit einem Handgerät ausgeführt. Gemäß einer weiteren bevorzugten Ausführungsform vorliegender Erfindung wird das Installationsverfahrens mithilfe eines Einbauautomaten und der Vorspannpatrone 20 mit Antriebsmodul A durchgeführt.

Im Folgenden wird eine bevorzugte Ausführungsform des Installationsverfahrens beschrieben, wobei weitere Schritte ergänzt oder Schritte weggelassen werden können.

Zur Vorbereitung des Installationsverfahrens wird in einem Schritt ST 0 die Einbauspindel 10 entgegen der Einbaurichtung R_{E} durch Drehen zurückgezogen. Auf diese Weise sind durch das radiale Positionierfenster 28 das Innengewinde 32 des Vorspannrings 30 sowie der angrenzende Spindelkanal 24 für das Einsetzen des Drahtgewindeeinsatzes D frei zugänglich.

Entsprechend wird dann der Drahtgewindeeinsätze D in Einbaurichtung R_{E} über dem Vorspannring 30 positioniert, wie es in den Figuren 6a, b gezeigt ist (ST 1).

Gemäß einer bevorzugten Ausgestaltung des Installationsverfahrens wird die ringförmige Stirnseite 26 angrenzend an die Gewindebohrung G und insbesondere die Vorspannpatrone 20 bevorzugt koaxial zur Längsachse der Gewindebohrung G angeordnet. Zur bevorzugten Prüfung der Position der Vorspannpatrone 20 und damit des Installationswerkzeugs 1 im Verhältnis zur Gewindebohrung G wird der Abstand zwischen der Stirnseite 26 und der Bauteiloberfläche O_{B} mithilfe der mindestens einen taktilen Erfassungseinheit 40 abgefragt (ST 2).

Sollte der erfasste Abstand in einem vordefinierten Bereich liegen, was bevorzugt durch das Steuergerät S ausgewertet wird, kann der Installationsprozess fortgesetzt werden. Dies erfolgt bei der Nutzung eines Einbauautomaten automatisch. Bei der Nutzung eines Handgeräts wird dem Werker vorzugsweise über ein Display oder ein akustisches Signal oder ein optisches Signal mitgeteilt, dass die Anordnung von Vorspannpatrone 20 und Bauteil B nicht den Anforderungen entspricht oder eben gerade den Anforderungen entspricht. Dieses Signal stellt vorzugsweise die Aufforderung an den Werker dar, dass Installationswerkzeug neu anzuordnen und den Installationsprozess fortzusetzen, falls der geforderte Abstand nicht den Anforderungen entsprechen sollte. Sollte dem Werker signalisiert werden, dass die Abstandsmessung in Ordnung ist, setzt dieser den Installationsvorgang fort. Es ist ebenfalls bevorzugt, an den Werker nur dann ein Signal auszugeben, wenn die Installation unterbrochen werden muss.

Bei passender Anordnung des Installationswerkzeugs 1 zur Gewindeöffnung G, vorzugsweise Anordnung der Stirnseite 26 mit einem Abstand in einem definierten Abstandsbereich zur benachbarten Bauteiloberfläche, weiter bevorzugt auch in Kontakt mit der Bauteiloberfläche, wird im Schritt ST 3 die Einbauspindel 10 gedreht, sodass sie sich in Richtung Vorspannring 30 bewegt, in den Drahtgewindeeinsatz D eingeschraubt wird und den Drahtgewindeeinsatz D in das Innengewinde 32 des Vorspannrings 30 einschraubt bzw. dort vorspannt (siehe Figuren 6b, c).

Während des Schritts ST 3 wird vorzugsweise das durch den Motor des Antriebsmoduls A auf die Einbauspindel 10 übertragene Drehmoment mit einem vorgegebenen Maximaldrehmoment verglichen. Wird ein vorgegebenes Maximaldrehmoment überschritten, weist dies auf einen Mangel beim Vorinstallieren des Drahtgewindeeinsatzes D im Vorspannring 30 hin.

Der Vergleich zwischen dem aktuellen Drehmoment der Einbauspindel 10 und einem Maximaldrehmoment wird bevorzugt im Steuergerät S durchgeführt. Dieser Vergleich findet alternativ in Echtzeit während der Vorinstallation oder nach Abschluss der Vorinstallation statt.

Liegt ein Mangel bei der Vorinstallation vor, dreht der Einbauautomat bevorzugt die Einbauspindel 10 wieder zurück und bewegt sie entgegen der Einbaurichtung R_{E}. Im Betrieb eines Handgeräts wird der festgestellte Mangel bzw. die festgestellte Überschreitung des Maximaldrehmoments dem Werker akustisch, optisch oder über ein Display mitgeteilt. Entsprechend bewegt der Werker dann die Einbauspindel 10 zurück, um die Ursache des Mangels zu erkennen und den Mangel zu beheben.

Nachdem der Drahtgewindeeinsatz D in der Vorspannpatrone 20 vorinstalliert ist, findet im Schritt ST 4 die Installation oder das Einschrauben des Drahtgewindeeinsatzes D in die Gewindeöffnung G des Bauteils B statt (siehe Figuren 7 a, b).

Dazu startet der Werker am Handgerät manuell und der Einbauautomat automatisch die Drehung der Einbauspindel 10. Dadurch bewegt sich die Einbauspindel 10 und somit das Installationsende 14 mit Drahtgewindeeinsatz D in Einbaurichtung R_{E} zum Bauteil B und in die Gewindebohrung G. Während sich die Einbauspindel 10 in Einbaurichtung R_{E} bewegt, verlässt das Installationsende 14 mit Drahtgewindeeinsatz die den Vorspannring 30. Wenn das Installationsende 40 die Vorspannpatrone 20 verlässt, bewegt sich gleichzeitig das Schaltmerkmal 13 am Spindelsensor 60 vorbei und startet die Erfassung des durch die Installationsspindel 10 ab diesem Zeitpunkt zurückgelegten Drehwinkels (ST 5). Wie oben bereits beschrieben worden ist, wird aus dem zurückgelegten Drehwinkel der Einbauspindel 10 berechnet, wie weit sich das Installationsende 14 in Einbaurichtung R_{E} bewegt hat.

Diese konstruktive Anordnung eröffnet ebenfalls die bevorzugte Ausführungsform des Installationsverfahrens, indem das Steuergerät S einen maximalen Installationsweg der Einbauspindel 10 in Einbaurichtung R_{E} beginnend an der Stirnseite 26 der Vorspannpatrone 20 vorgibt. Der maximale Installationsweg wird vorzugsweise durch einen vordefinierten Drehwinkel festgelegt, der im Steuergerät S hinterlegt ist. Der Drehwinkel wird erfasst, sobald das Schaltmerkmal 13, vorzugsweise eine Schaltkante der Einbauspindel 10, den Spindelsensor 60 passiert. Sobald der erfasste zurückgelegte Drehwinkel der Einbauspindel 10 den vordefinierten Wert erreicht hat, wird die Drehung der Einbauspindel 10 gestoppt (ST 7). Auf diese Weise wird bevorzugt eine gewünschte maximale Einbautiefe des Drahtgewindeeinsatzes D in der Gewindebohrung G vorgegeben.

Während des Eintretens des Drahtgewindeeinsatzes D in die Gewindebohrung G wird ebenfalls bevorzugt das durch die Einbauspindel 10 genutzte Drehmoment erfasst und ausgewertet (ST 6). Überschreitet das Drehmoment einen vorgegebenen Schwellenwert, weist dies auf einen Fehler bei der Installation hin. Entsprechend wird der Installationsvorgang gestoppt und die Einbauspindel 10 aus der Gewindebohrung G entfernt. Dies erfolgt durch den Einbauautomaten automatisch oder manuell durch den Werker mithilfe eines Zurückdrehens der Einbauspindel 10.

Gemäß einer weiteren bevorzugten Ausführungsform des vorliegenden Installationsverfahrens wird durch das Steuergerät S der Abstand zwischen der ringförmigen Stirnseite 26 und der benachbarten Bauteiloberfläche O_{B} ausgewertet (ST 8). Die Daten zur Beurteilung des Abstands liefert vorzugsweise die mindestens eine taktile Erfassungseinheit 40 mit dem Fühlerstift 42 an das Steuergerät S, dessen Kontaktende 54 vorzugsweise an der Bauteiloberfläche O_{B} angreift. Das Steuergerät S vergleicht die gelieferten Abstandsdaten mit einem vordefinierten oder im Steuergerät S hinterlegten Maximalabstand. Ist der Maximalabstand überschritten, ist die Installation des Drahtgewindeeinsatzes D nicht in Ordnung. Entsprechend wird die Installationsspindel 10 zurückgedreht und der Installationsvorgang als nicht abgeschlossen oder als nicht in Ordnung qualifiziert.

Bestätigt der erfasste Abstand der taktilen Erfassungseinheit 40 einen Kontakt zur Bauteiloberfläche O_{B} oder einen Abstandswert unterhalb des vordefinierten Maximalabstands, wird die Installation als in Ordnung abgeschlossen. Nachfolgend wird die Installationsspindel 10 aus dem Drahtgewindeeinsatz D entfernt.

Gemäß einer bevorzugten Anwendung des Installationsverfahrens wird der Drahtgewindeeinsätze D bis unterhalb der Bauteiloberfläche O_{B} in die Gewindebohrung G eingedreht. Auf diese Weise wird die Gewindebohrung G besser verstärkt, als wenn der Drahtgewindeeinsatz D nach der Installation an die Bauteiloberfläche O_{B} angrenzen würde. Daher wird vorzugsweise ein Drehwinkel zur Installation und damit eine Bewegung der Einbauspindel 10 in Einbaurichtung R_{E} über eine Strecke vorgegeben, die die axiale Länge des Drahtgewindeeinsatzes D über einen bestimmten Mindestbetrag, vorzugsweise die Steigung des Spindelführungsgewindes multipliziert mit einem Winkel von bspw. 450°, übersteigt. Der Mindestbetrag wird bevorzugt nach Anwendungsfall gewählt.

Die oben gewählte bevorzugte Einbaustrecke von Länge des Drahtgewindeeinsatzes D plus 450° Drehwinkel der Einbauspindel 10 multipliziert mit der Steigung des Gewindes der Installationsspindel 10 gewährleistet, dass der Drahtgewindeeinsatz D bis unterhalb der Bauteiloberfläche Os eingebaut ist. Zu Beginn des Eintretens des Drahtgewindeeinsatzes D in die Gewindebohrung G ist offen, ob der Drahtgewindeeinsatz D sofort in das Innengewinde der Gewindebohrung G einläuft. Vielmehr ist es wahrscheinlich, dass der Drahtgewindeeinsatz D erst nach einem Drehwinkel der Einbauspindel 10 von maximal 360° in das Innengewinde der Gewindebohrung G einläuft. Dieses um einen bestimmten Drehwinkelversatz verspätete Einlaufen des Drahtgewindeeinsatzes D in das Innengewinde der Gewindeöffnung G hat zur Folge, dass zum Abschluss der Installation des Drahtgewindeeinsatzes D die ringförmige Stirnseite 26 der Vorspannpatrone 20 in einem Abstand zur Bauteiloberfläche O_{B} angeordnet ist. Dieser Abstand entspricht annähernd dem Produkt aus Drehwinkelversatz und Steigung des Spindelführungsgewindes oder des Spindelgewindes 16 oder des Drahtgewindeeinsatzes D, da diese bevorzugt gleich sind.

Da zum Abschluss der Installation des Drahtgewindeeinsatzes D vorzugsweise der Abstand erfasst über die mindestens eine taktile Erfassung 41 ausgewertet wird, wird auch in diesem Zusammenhang bevorzugt ein möglicher Drehwinkel Versatz und der sich daraus ergebende Abstand berücksichtigt. Somit wird auch eine Installation des Drahtgewindeeinsatzes D als in Ordnung eingestuft, wenn die ringförmige Stirnseite 26 um den Abstand gemäß dem Produkt aus Drehwinkelversatz, vorzugsweise maximal 360°, und Steigung des Gewindes 16 der Einbauspindel 10 zur Bauteiloberfläche angeordnet ist.

### Bezugszeichenliste

- B: Bauteil
- G: Gewindebohrung
- O_{B}: Bauteiloberfläche
- D: Drahtgewindeeinsatz
- A: Antriebsmodule
- M: Installationsmodul
- K: Kopplung zwischen Antriebsmodul und Installationsmodul
- S: Steuergerät
- 1: Installationswerkzeug
- 10: Einbauspindel
- 12: Antriebsende
- 13: Schaltmerkmal
- 14: Installationsende
- 16: Gewinde
- 18: Vorsprung
- 20: Vorspannpatrone
- 21: axiales Ende der Vorspannpatrone abgewandt vom Antriebsmodul A
- 22: umlaufende Wand der Vorspannpatrone
- 24: Spindelkanal
- 25: Spindelführungsgewinde
- 26: ringförmige Aufsetzstimfläche
- 28: radiales Positionierfenster
- 30: Vorspannring
- 32: Innengewinde des Vorspannrings 30
- 40: taktile Erfassungseinheit
- 42: Fühlerstift
- 44: Feder
- 46: Führung für Fühlerstift
- 50: Sensor
- 52: Sensorplatte
- 54: Kontaktende
- 60: Spindelsensor
- ST0: Einbauspindel in eingezogener Position
- ST1: Vorinstallation des Drahtgewindeeinsatzes auf dem Installationsende im Vorspannring
- ST2: Anordnen des Werkzeugs über der Gewindebohrung
- ST3: Abfrage des Abstands oder Kontakts zwischen Vorspannpatrone und Bauteil über die mindestens eine taktile Erfassungseinheit - optionaler Verfahrensschritt
- ST4: Eindrehen des Drahtgewindeeinsatzes in die Gewindebohrung
- ST5: Erfassen des Drehwinkels der Einbauspindel während der Installation des Drahtgewindeeinsatzes
- ST6: Erfassen des aufgebrachten Drehmoments der Einbauspindel während der Installation des Drahtgewindeeinsatzes
- ST7: Beenden des Eindrehens des Drahtgewindeeinsatzes
- ST8: Abfrage des Abstands zwischen der Bauteiloberfläche und der ringförmigen Stirnseite über die mindestens eine taktile Erfassungseinheit

## Patentansprüche

1. Eine hohlzylindrische Vorspannpatrone (20) eines Installationswerkzeugs (1) eines Drahtgewindeeinsatzes (D), welche die folgenden Merkmale aufweist:
a. einen innerhalb der Vorspannpatrone (20) verlaufenden Spindelkanal (24), in dem eine Einbauspindel (10) mit einem Installationsende und einem Antriebsende in einem inneren Spindelführungsgewinde geführt ist,
b. eine den Spindelkanal (24) zumindest teilweise umgebende Außenwand (22) der Vorspannpatrone mit einem radialen Positionierfenster (28) benachbart zu einem ersten axialen Ende der Vorspannpatrone (20) abgewandt von dem Antriebsende (12) der Einbauspindel (10), durch welches ein Drahtgewindeeinsatz (D) im Spindelkanal (24) auf der Einbauspindel (10) positionierbar ist,
**dadurch gekennzeichnet, dass**
c. mindestens eine erste taktile Erfassungseinheit (40), die über eine bevorzugt ringförmige Stirnseite (26) der Vorspannpatrone (20) am ersten axialen Ende hinaus ragt und parallel zu einer Längsachse der Vorspannpatrone versetzbar ist, wobei ein axialer Versatz der mindestens einen taktilen Erfassungseinheit (40) mit einem ersten Erfassungssensor der Vorspannpatrone erfassbar ist.

2. Die hohlzylindrische Vorspannpatrone (20) gemäß Patentanspruch 1, in der die mindestens eine taktile Erfassungseinheit (40) einen Fühlerstift (42) aufweist, der federvorgespannt in einem Kanal der Außenwand (22) angeordnet ist.

3. Die hohlzylindrische Vorspannpatrone (20) gemäß Patentanspruch 2, deren Fühlerstift (42) ein axiales Tastende und ein axiales Erfassungsende aufweist, wobei das axiale Tastende angrenzend an die bevorzugt ringförmige Stirnseite (26) und das axiale Erfassungsende benachbart zu dem ersten Erfassungssensor angeordnet ist.

4. Die hohlzylindrische Vorspannpatrone (20) gemäß einem der vorhergehenden Patentansprüche, deren Einbauspindel (10) benachbart zu dem Antriebsende ein Schaltmerkmal aufweist, welches mit einem Spindelsensor zusammenwirkt, um einen axialen Versatz der Einbauspindel (10) in einer Installationsrichtung des Drahtgewindeeinsatzes zu erfassen.

5. Die hohlzylindrische Vorspannpatrone (20) gemäß einem der vorhergehenden Patentansprüche, wobei der erste Erfassungssensor und / oder vorzugsweise ein Spindelsensor ein induktiver Sensor oder ein kapazitiver Sensor oder ein optischer Sensor ist.

6. Die hohlzylindrische Vorspannpatrone (20) gemäß einem der vorhergehenden Patentansprüche, die eine zweite taktile Erfassungseinheit aufweist, die über die ringförmige Stirnseite (26) der Vorspannpatrone (20) am ersten axialen Ende hinausragt und parallel zu einer Längsachse der Vorspannpatrone versetzbar ist, wobei ein axialer Versatz der zweiten taktilen Erfassungseinheit mit einem zweiten Erfassungssensor der Vorspannpatrone erfassbar ist.

7. Die hohlzylindrische Vorspannpatrone (20) gemäß Patentanspruch 6, wobei die erste und die zweite taktile Erfassungseinheit um einen Winkel (α) aus dem Bereich von 10° bis 350° zueinander auf der ringförmigen Stirnseite beabstandet sind.

8. Die hohlzylindrische Vorspannpatrone (20) gemäß einem der vorhergehenden Patentansprüche, in der ein axialer Abschnitt zwischen der bevorzugt ringförmigen Stirnseite (26) und dem Positionierfenster (28) ein Innengewinde (32) zur Vorinstallation eines Drahtgewindeeinsatzes (D) aufweist.

9. Ein Installationswerkzeug (1) eines Drahtgewindeeinsatzes (D) mit einem motorischen Antriebsmodule (A) und einem Installationsmodul (M) mit einer hohlzylindrischen Vorspannpatrone (20) gemäß einem der vorhergehenden Patentansprüche.

10. Das Installationswerkzeug (1) gemäß Patentanspruch 9, in dem das Installationsmodul (M) lösbar mit dem Antriebsmodule (A) verbindbar ist.

11. Das Installationswerkzeug (1) gemäß Patentanspruch 9 oder 10, welches mit einem Einbauautomaten verbunden ist, vorzugsweise robotergeführt, oder welches als Handgerät vorgesehen ist.

12. Das Installationswerkzeug (1) gemäß zumindest einem der Patentansprüche 9 bis 11, welches ein Steuergerät aufweist, mit dem Daten von mindestens einem Erfassungssensor des Installationswerkzeugs empfangbar und auswertbar sind.

13. Ein Nachrüstsatz für ein Installationswerkzeug (1) eines Drahtgewindeeinsatzes (G) mit einem miteinander lösbar verbindbaren Antriebsmodul (A) und einem Installationsmodul (M) angepasst an einen Drahtgewindeeinsatz (D), der mindestens zwei Vorspannpatronen (M) gemäß einem der vorhergehenden Patentansprüche 1 bis 7 aufweist, die sich in einer Konstruktion und/oder Dimension der Einbauspindel (10), oder der Vorspannpatrone (20) unterscheiden.

14. Ein Installationsverfahrens für einen Drahtgewindeeinsatz (D) in einer Gewindebohrung (G) eines Bauteils (B) mit einem Installationswerkzeug (1), insbesondere ein Installationswerkzeug (1) gemäß einem der Patentansprüche 9 bis 12, welches die folgenden Schritte aufweist:
a. Vorinstallieren eines Drahtgewindeeinsatzes (D) auf einer Einbauspindel (10) in einer Vorspannpatrone (20) des Installationswerkzeugs (1), (ST 1)
b. Anordnen des Installationswerkzeugs (1) mit dem vorinstallierten Drahtgewindeeinsatz (D) benachbart zu einem Eingang einer Gewindebohrung (G) in einer annähernd koaxialen Ausrichtung der Einbauspindel (10) zu einer Längsachse der Gewindebohrung (G) (ST 2),
c. Axiales Bewegen des Drahtgewindeeinsatzes mit der Einbauspindel in einer Einbaurichtung in die Gewindebohrung durch Drehen der Einbauspindel (ST 4), insbesondere durch ein Führen der sich drehenden Einbauspindel in einem inneren Spindelführungsgewinde einer Vorspannpatrone,
d. Erfassen eines während des Drehens der Einbauspindel zurückgelegten Drehwinkel der Einbauspindel (ST 5), aus dem durch Multiplikation mit einer Steigung eines Spindelgewindes der Einbauspindel eine Einbautiefe eines Drahtgewindeeinsatzes in der Gewindeöffnung ableitbar ist,
e. Beenden des Drehens der Einbauspindel nach einem zurückgelegten vorgegebenen Drehwinkel der Einbauspindel (ST 7)
**dadurch gekennzeichnet, dass** das Verfahren noch folgenden Schritt aufweist:
f. Abfragen mindestens einer taktilen Erfassungseinheit, die über eine Stirnseite der Vorspannpatrone hinaus ragt (ST 8), nach einem Abstand zwischen der Stirnseite und dem Bauteil.

15. Das Installationsverfahren gemäß Patentanspruch 14, mit dem weiteren Schritt:
Bewerten des erfassten Abstands der mindestens einen taktilen Erfassungseinheit, ob dieser innerhalb oder außerhalb eines vorgegebenen Abstandsbereichs liegt.

16. Das Installationsverfahren gemäß Patentanspruch 14, mit dem weiteren Schritt:
Ermitteln eines absoluten Abstands durch Abfragen der mindestens einen taktilen Erfassungseinheit und Bewerten, ob der absolute Abstand innerhalb oder außerhalb eines vorgegebenen Abstandsbereichs liegt.

17. Das Installationsverfahrens gemäß einem der Patentansprüche 14 bis 16, mit dem weiteren Schritt:
Erfassen eines Drehmoments der Einbauspindel während des Drehens der Einbauspindel beim axialen Bewegen des Drahtgewindeeinsatzes in die Gewindeöffnung (ST 6).

18. Das Installationsverfahrens gemäß Patentanspruch 17, mit dem weiteren Schritt:
Unterbrechen des Bewegens der Einbauspindel in Einbaurichtung, wenn ein erstes vorgegebenes Drehmoment überschritten ist, und/oder
Unterbrechen des Bewegens der Einbauspindel in Einbaurichtung, wenn ein zweites vorgegebenes Drehmoment nicht erreicht wird.

19. Das Installationsverfahren gemäß einem der vorhergehenden Patentansprüche 14 bis 18, mit dem weiteren Schritt:
Anzeigen von mindestens einem der folgenden Größen auf einem Display: das Drehmoment der Einbauspindel, den zurückgelegten Drehwinkel der Einbauspindel oder einen Abstand erfasst durch die mindestens eine taktile Erfassungseinheit.

## Claims

1. A hollow-cylindrical preloading cartridge (20) of an installation tool (1) of a wire thread insert (D) comprising the following features:
a. a mandrel channel (24) extending within the preloading cartridge (20), in which an assembly mandrel (10) with an installation end and a drive end is guided in an inner mandrel guiding thread,
b. an outer wall (22) of the preloading cartridge which encompasses the mandrel channel (24) at least partly with a radial positioning window (28) adjacent to a first axial end of the preloading cartridge (20) facing away from the drive end (12) of the assembly mandrel (10), through which a wire thread insert (D) is positionable in the mandrel channel (24) on the assembly mandrel (10), **characterized in that**
c. at least a first tactile detection unit (40) projecting beyond a preferably ring-like front side (26) of the preloading cartridge (20) on the first axial end and being offsetable parallel to a longitudinal axis of the preloading cartridge, wherein an axial offset of the at least one tactile detection unit (40) is detectable with a first detection sensor of the preloading cartridge.

2. The hollow-cylindrical preloading cartridge (20) according to claim 1, in which the at least one tactile detection unit (40) comprises a sensor pin (42) that is arranged in a spring-preloaded manner in a channel of the outer wall (22).

3. The hollow-cylindrical preloading cartridge (20) according to claim 2, the sensor pin (42) of which comprises an axial feeler end and an axial detection end wherein the axial feeler end is arranged adjacent to the preferably ring-like front side (26) and the axial detection end is arranged adjacent to the first detection sensor.

4. The hollow-cylindrical preloading cartridge (20) according to one of the preceding claims, the assembly mandrel (10) of which includes a switch feature adjacent to the drive end which interacts with a mandrel sensor in order to detect an axial offset of the assembly mandrel (10) in an installation direction of the wire thread insert.

5. The hollow-cylindrical preloading cartridge (20) according to one of the preceding claims, wherein the first detection sensor and / or preferably a mandrel sensor is an inductive sensor or a capacitive sensor or an optical sensor.

6. The hollow-cylindrical preloading cartridge (20) according to one of the preceding claims, including a second tactile detection unit which projects beyond the ring-like front side (26) of the preloading cartridge (20) at the first axial end and is offsetable parallel to a longitudinal axis of the preloading cartridge, wherein an axial offset of the second tactile detection unit is detectable with a second detection sensor of the preloading cartridge.

7. The hollow-cylindrical preloading cartridge (20) according to claim 6, wherein the first and the second tactile detection unit (40) are spaced from one another by an angle (α) from the range of 10° to 350° on the ring-like front side.

8. The hollow-cylindrical preloading cartridge (20) according to one of the preceding claims, with an axial section between the ring-like front side (26) and the positioning window (28) including an inner thread (32) for the preinstallation of a wire thread insert (D).

9. An installation tool (1) of a wire thread insert (D) with a motoric drive module (A) and an installation module (M) with a hollow-cylindrical preloading cartridge (20) according to one of the preceding claims.

10. The installation tool (1) according to claim 9, in which the installation module (M) is releasably connectable with the drive module (A).

11. The installation tool (1) according to claim 9 or 10, which is connected with an installation automat, preferably controlled by a robot, or is provided as a manual device.

12. The installation tool (1) according to at least one of the claims 9 to 11, which includes a control device with which data from at least one detection sensor of the installation tool can be received and analyzed.

13. A retrofit kit for an installation tool (1) of a wire thread insert (G) with a drive module (A) and an installation module (M) which are releasably connectable with one another, wherein the installation module (M) is adapted to a wire thread insert (D) having at least two preloading cartridges (M) according to one of the preceding claims 1 to 7, which differ in terms of a construction and/or dimension of the assembly mandrel (10) or of the preloading cartridge (20).

14. An installation method for a wire thread insert (D) in a thread bore (G) of a component (B) with an installation tool (1), in particular an installation tool (1) according to one of the claims 9 to 12, having the following steps:
a. pre-installing a wire thread insert (D) on an assembly mandrel (10) in a preloading cartridge (20) of the installation tool (1) (ST 1),
b. arranging the installation tool (1) with the preinstalled wire thread insert (D) adjacent to an entry of a thread bore (G) in an almost coaxial alignment of the assembly mandrel (10) to a longitudinal axis of the thread bore (G) (ST2),
c. axially moving of the wire thread insert with the assembly mandrel (10) in an installation direction into the thread bore by rotating the assembly mandrel (ST 4), in particular by a guiding of the rotating assembly mandrel (10) in an inner mandrel guiding thread of a preloading cartridge,
d. detecting of a rotation angle covered during the rotating of the assembly mandrel (ST 5) from which by multiplication with a pitch of a mandrel thread of the assembly mandrel, an installation depth of a wire thread insert in the thread opening can be estimated,
e. finishing the rotating of the assembly mandrel after a covered, predetermined rotation angle of the assembly mandrel (ST 7) and
**characterized in that** the method furthermore includes the following step:
f. retrieving information from at least one tactile detection unit which projects beyond a front side of the preloading cartridge (ST 8) regarding a distance between the front side and the component.

15. The installation method according to claim 14, having the further step:
assessing the detected distance of the at least one tactile detection unit as to whether the distance lies within or outside of a predetermined distance range.

16. The installation method according to claim 14, with the further step:
detecting an absolute distance by retrieving information from the at least one tactile detection unit and assessing if the absolute distance lies within or outside of a predetermined distance range.

17. The installation method according to one of the claims 14 to 16, with the further step:
detecting a torque of the assembly mandrel during the rotating of the assembly mandrel when axially moving the wire thread insert into the thread opening (ST 6).

18. The installation method according to claim 17, with the further step:
interrupting the moving of the assembly mandrel in installation direction when a first, predetermined torque is exceeded and/or
interrupting the moving of the assembly mandrel in installation direction when a second predetermined torque is not reached.

19. The installation method according to one of the preceding claims 14 to 18, with the further step:
showing at least one of the following sizes on a display: the torque of the assembly mandrel, the covered rotation angle of the assembly mandrel or a distance detected by the at least one tactile detection unit.

## Revendications

1. Bobinoir préliminaire cylindrique creux (20) d'un outil d'installation (1) d'un insert hélicoïdal en fil métallique (D), présentant les caractéristiques suivantes :
a. un canal de broche (24) s'étendant à l'intérieur du bobinoir préliminaire (20), dans lequel une broche de montage (10) présentant une extrémité d'installation et une extrémité d'entraînement est guidée dans un filetage de guidage de broche,
b. une paroi extérieure (22) du bobinoir préliminaire entourant au moins partiellement le canal de broche (24) avec une fenêtre de positionnement radiale (28) adjacente à une première extrémité axiale du bobinoir préliminaire (20) opposée à l'extrémité d'entraînement (12) de la broche de montage (10), à travers laquelle un insert hélicoïdal en fil métallique (D) peut être positionné sur la broche de montage (10) dans le canal de broche (24),
**caractérisé par**
c. au moins une première unité de détection tactile (40), laquelle fait saillie au-delà d'un côté frontal de préférence annulaire (26) du bobinoir préliminaire (20) à la première extrémité axiale et peut être décalée parallèlement à un axe longitudinal du bobinoir préliminaire, dans lequel un décalage axial de l'au moins une unité de détection tactile (40) peut être détecté à l'aide d'un premier capteur de détection du bobinoir préliminaire.

2. Bobinoir préliminaire cylindrique creux (20) selon la revendication 1, dans lequel l'au moins une unité de détection tactile (40) présente une tige de palpeur (42), laquelle est disposée de façon précontrainte par ressort dans un canal de la paroi extérieure (22).

3. Bobinoir préliminaire cylindrique creux (20) selon la revendication 2, dont la tige de palpeur (42) présente une extrémité de palpage axiale et une extrémité de détection axiale, dans lequel l'extrémité de palpage axiale est disposée à proximité du côté frontal de préférence annulaire (26) et l'extrémité de détection axiale est disposée de façon adjacente au premier capteur de détection.

4. Bobinoir préliminaire cylindrique creux (20) selon l'une des revendications précédentes, dont la broche de montage (10) présente un élément de commutation adjacent à l'extrémité d'entraînement, lequel coopère avec un capteur de broche pour détecter un décalage axial de la broche de montage (10) dans une direction d'installation de l'insert hélicoïdal en fil métallique.

5. Bobinoir préliminaire cylindrique creux (20) selon l'une des revendications précédentes, dans lequel le premier capteur de détection et/ou de préférence un capteur de broche est un capteur inductif ou un capteur capacitif ou un capteur optique.

6. Bobinoir préliminaire cylindrique creux (20) selon l'une des revendications précédentes, présentant une deuxième unité de détection tactile, laquelle fait saillie au-delà du côté frontal annulaire (26) du bobinoir préliminaire (20) à la première extrémité axiale et peut être décalée parallèlement à un axe longitudinal du bobinoir préliminaire, dans lequel un décalage axial de la deuxième unité de détection tactile peut être détecté à l'aide d'un deuxième capteur de détection du bobinoir préliminaire.

7. Bobinoir préliminaire cylindrique creux (20) selon la revendication 6, dans lequel la première et la deuxième unités de détection tactile sont espacées l'une de l'autre selon un angle (α) dans la plage de 10° à 350° sur le côté frontal annulaire.

8. Bobinoir préliminaire cylindrique creux (20) selon l'une des revendications précédentes, dans lequel une section axiale entre le côté frontal de préférence annulaire (26) et la fenêtre de positionnement (28) présente un filetage intérieur (32) pour l'installation préalable d'un insert hélicoïdal en fil métallique (D).

9. Outil d'installation (1) d'un insert hélicoïdal en fil métallique (D) avec un module d'entraînement motorisé (A) et un module d'installation (M) avec un bobinoir préliminaire cylindrique creux (20) selon l'une des revendications précédentes.

10. Outil d'installation (1) selon la revendication 9, dans lequel le module d'installation (M) peut être relié de façon détachable au module d'entraînement (A).

11. Outil d'installation (1) selon la revendication 9 ou 10, lequel est relié à un automate de montage, de préférence par assistance robotisée, ou prévu sous la forme d'un appareil portatif.

12. Outil d'installation (1) selon l'une au moins des revendications 9 à 11, lequel présente un appareil de commande permettant de recevoir et d'évaluer des données d'au moins un capteur de détection de l'outil d'installation.

13. Kit d'adaptation pour un outil d'installation (1) d'un insert hélicoïdal en fil métallique (G) doté d'un module d'entraînement (A) et d'un module d'installation (M) aptes à être reliés entre eux de façon détachable, adapté à un insert hélicoïdal en fil métallique (D) présentant au moins deux bobinoirs préliminaires (M) selon l'une des revendications précédentes 1 à 7, lesquels se distinguent quant à une construction et/ou dimension de la broche de montage (10) ou du bobinoir préliminaire (20).

14. Procédé d'installation pour un insert hélicoïdal en fil métallique (D) dans un alésage fileté (G) d'un composant (B) à l'aide d'un outil d'installation (1), en particulier un outil d'installation (1) selon l'une des revendications 9 à 12, présentant les étapes suivantes :
a. installation préalable d'un insert hélicoïdal en fil métallique (D) sur une broche de montage (10) dans un bobinoir préliminaire (20) de l'outil d'installation (1), (ST1)
b. disposition de l'outil d'installation (1) avec l'insert hélicoïdal en fil métallique (D) préalablement installé à proximité d'une entrée d'un alésage fileté (G) selon une orientation approximativement coaxiale de la broche de montage (10) par rapport à un axe longitudinal de l'alésage fileté (G) (ST 2),
c. déplacement axial de l'insert hélicoïdal en fil métallique avec la broche de montage dans une direction de montage dans l'alésage fileté par rotation de la broche de montage (ST 4), en particulier par guidage de la broche de montage en rotation dans un filetage de guidage de broche intérieur d'un bobinoir préliminaire,
d. détection d'un angle de rotation de la broche de montage parcouru pendant la rotation de la broche de montage (ST 5), à partir duquel une profondeur de montage d'un insert hélicoïdal en fil métallique dans l'ouverture filetée peut être déduite par multiplication par un pas d'un filetage de broche de la broche de montage,
e. fin de la rotation de la broche de montage après un angle de rotation prédéfini parcouru de la broche de montage (ST 7),
**caractérisé en ce que** le procédé présente en outre l'étape suivante :
f. consultation d'au moins une unité de détection tactile, laquelle fait saillie au-delà d'un côté frontal du bobinoir préliminaire (ST 8), selon une distance entre le côté frontal et le composant.

15. Procédé d'installation selon la revendication 14, comprenant l'étape supplémentaire suivante :
évaluation de la distance détectée de l'au moins une unité de détection tactile, si celle-ci se trouve dans une plage de distance prédéfinie ou en dehors de celle-ci.

16. Procédé d'installation selon la revendication 14, comprenant l'étape supplémentaire suivante :
détermination d'une distance absolue par consultation de l'au moins une unité de détection tactile et évaluation si la distance absolue se trouve dans une plage de distance prédéfinie ou en dehors de celle-ci.

17. Procédé d'installation selon l'une des revendications 14 à 16, comprenant l'étape supplémentaire suivante :
détection d'un couple de rotation de la broche de montage pendant la rotation de la broche de montage lors du déplacement axial de l'insert hélicoïdal en fil métallique dans l'ouverture filetée (ST 6).

18. Procédé d'installation selon la revendication 17, comprenant l'étape supplémentaire suivante :
interruption du déplacement de la broche de montage dans la direction de montage, lorsqu'un premier couple de rotation prédéfini est dépassé, et/ou
interruption du déplacement de la broche de montage dans la direction de montage, lorsqu'un deuxième couple de rotation prédéfini n'est pas atteint.

19. Procédé d'installation selon l'une des revendications précédentes 14 à 18, comprenant l'étape supplémentaire suivante :
affichage de l'une au moins des grandeurs suivantes sur un écran : le couple de rotation de la broche de montage, l'angle de rotation parcouru de la broche de montage ou une distance détectée par l'au moins une unité de détection tactile.
